# EUROPEAN PATENT SPECIFICATION

(11) **EP 4 632 943 B1**
(45) Date of publication and mention of the grant of the patent: **19.08.2026**
(21) Application number: 25175972.6
(22) Date of filing: 30.11.2023
(51) Int. Cl.: H01M 50/627, B23K 26/21, H01M 50/636, B23K 26/082, H01M 50/15, H01M 50/103

(54) **END COVER ASSEMBLY, ENERGY-STORAGE APPARATUS, AND ELECTRICITY-CONSUMPTION DEVICE**
ENDKAPPENANORDNUNG, ENERGIESPEICHERVORRICHTUNG UND ELEKTRIZITÄTSVERBRAUCHSVORRICHTUNG
ENSEMBLE COUVERCLE D'EXTRÉMITÉ, APPAREIL DE STOCKAGE D'ÉNERGIE ET DISPOSITIF DE CONSOMMATION D'ÉLECTRICITÉ

(30) Priority: 09.02.2023 CN 202310091082
(43) Date of publication of application: 15.10.2025
(62) Document number(s) of the earlier application(s) in accordance with Art. 76 EPC: 23213252.2 / 4 415 156
(73) Proprietor: Hithium Tech HK Limited, Hong Kong (HK)
(72) Inventor: XU, Weidong, Shenzhen, 518110 (CN); XIONG, Yongfeng, Shenzhen, 518110 (CN); CHEN, Jinqiang, Shenzhen, 518110 (CN)
(74) Representative: Santarelli

(56) References cited:
- EP-A1- 2 141 758
- EP-B1- 2 479 816
- CN-U- 218 039 756
- US-A- 6 045 944

## Description

### TECHNICAL FIELD

This disclosure relates to the electronic field, and in particular to an end cover assembly, an energy-storage apparatus, and an electricity-consumption device.

### BACKGROUND

For energy-storage apparatuses such as lithium batteries or sodium batteries, after end cover assemblies are assembled, electrolytes are filled through liquid-injection holes of the end cover assemblies, and after filling the electrolytes, sealing caps need to be welded to the liquid-injection hole to seal the liquid-injection hole. However, for the existing energy-storage apparatuses, poor welding often occurs after welding the sealing cap, resulting in low product yield.

EP 2141758 A1 discloses a secondary battery including a cap assembly. The cap assembly includes a cap plate including an electrolyte injection hole, the electrolyte injection hole includes an upper tapered portion, and the tapered portion has a surface roughness. The secondary battery further includes a sealing member located in the electrolyte injection hole to seal the electrolyte injection hole. The sealing member includes a cap and a resin coated on an outer circumference of the cap.

### SUMMARY

The invention is defined by the independent claims. In view of the above-mentioned problem, an end cover assembly that can improve the yield is provided in embodiments of the present disclosure.

In a first aspect of the present disclosure, an end cover assembly for an energy-storage apparatus is provided. The end cover assembly includes a top cover. The top cover has a first surface and further defines a liquid-injection hole extending through the first surface. The first surface includes a first sub-surface and a second sub-surface connected to the first sub-surface. The first sub-surface is around the liquid-injection hole. The second sub-surface is around a periphery of the first sub-surface. Roughness of the first sub-surface is greater than roughness of the second sub-surface.

Further, the roughness Ra of the first sub-surface is in a range of 3.2 ≤ Ra ≤ 50.

Further, the first sub-surface is annular. The first sub-surface has a linewidth L1 in a range of 1.5 mm ≤ L1 ≤ 8.5 mm.

Further, the first sub-surface is annular, the liquid-injection hole is circular. A ratio of an outer radius R1 of the first sub-surface to a radius R2 of the liquid-injection hole is in a range of 1.2 ≤ R1/R2 ≤ 4.8.

Further, the end cover assembly further includes a sealing cap and an annular welding portion located at a junction between the sealing cap and the top cover. The sealing cap seals the liquid-injection hole and is connected to the top cover. The top cover is further provided with a first welding mark at the first sub-surface. The first welding mark includes a first end portion and a second end portion opposite to the first end portion. The first end portion is connected to the welding portion. The second end portion is located outside a periphery of the welding portion and is spaced apart from the welding portion.

Further, a ratio of an outer radius R4 of the welding portion (31) to a length L2 of the first welding mark (33) is in a range of 0.4 ≤ R4/L2 ≤ 2.8.

Further, the first welding mark (33) is straight, and an angle α between a line connecting a center of the sealing cap (30) and the first end portion (331) and the first welding mark (33) is in a range of 70° ≤ α ≤ 120°.

Further, the first sub-surface is annular. The sealing cap is circular. A ratio of an outer radius R1 of the first sub-surface to a radius R3 of the sealing cap is in a range of 1.45 ≤ R1/R3 ≤ 3.65.

Further, the top cover is further provided with a second welding mark at the first sub-surface. The second welding mark includes a third end portion and a fourth end portion arranged opposite to the third end portion. The third end portion is connected to the welding portion. The fourth end portion is located at the periphery of the welding portion and is spaced apart from the welding portion. The first end portion is spaced apart from or overlapped with the third end portion. The second end portion and the fourth end portion are respectively arranged at opposite sides of a line connecting the first end portion and a center of the liquid-injection hole.

Further, the welding portion is annular, the first welding mark has a length L2 satisfying $1.5 mm ⩽ L 2 ⩽ \sqrt{R {1}^{2} - R {4}^{2}}$ . The second welding mark has a length L3 satisfying $1.5 mm ⩽ L 3 ⩽ \sqrt{R {1}^{2} - R {4}^{2}}$. R1 is the outer radius of the first sub-surface. R4 is an outer radius of the welding portion.

Further, the length L2 of the first welding mark is in a range of 1.5 mm ≤ L2 ≤ 5.5 mm. The length L3 of the second welding mark is in a range of 1.5 mm ≤ L3 ≤ 5.5 mm.

Further, a ratio of an outer radius R4 of the welding portion (31) to the length L3 of the second welding mark (35) is in a range of 0.4 ≤ R4/L3 ≤ 2.8.

Further, the second welding mark (35) is straight. An angle β between a line connecting a center of the sealing cap (30) and the third end portion (351) and the second welding mark (35) is in a range of 70° ≤ β ≤ 120°.

Further, the welding portion is annular. The first welding mark and the second welding mark are straight. The first welding mark and the second welding mark are both tangent to the welding portion.

Further, the welding portion is annular. The second welding mark is arc. The second welding mark is tangent to the welding portion.

Further, the top cover further has a second surface away from the first surface. The liquid-injection hole further extends through the second surface. The second surface includes a third sub-surface and a fourth sub-surface connected to the third sub-surface. The third sub-surface is around a periphery of the liquid-injection hole. The fourth sub-surface is around a periphery of the third sub-surface. The third sub-surface exceeds the fourth sub-surface to form a protrusion.

Further, the second surface further includes a fifth sub-surface. The fifth sub-surface is around a periphery of the fourth sub-surface and is connected to the fourth sub-surface. The fifth sub-surface exceeds the fourth sub-surface. The third sub-surface exceeds the fifth sub-surface. The third sub-surface, the fourth sub-surface, and the fifth sub-surface cooperatively define a groove around the protrusion.

Further, the protrusion has a linewidth S1 in a range of 2.2 mm ≤ S1 ≤ 3.6 mm. The groove has a linewidth S2 in a range of 1.2 mm ≤ S2 ≤ 4.6 mm.

Further, the energy-storage apparatus further includes an electrode assembly. The top cover further has a second surface away from the first surface. The liquid-injection hole further extends through the second surface. The top cover further defines a first accommodating recess from the second surface. A second accommodating recess recessed from a bottom wall of the first accommodating recess. A first through hole extending through both a bottom wall of the second accommodating recess and the first surface. The first accommodating recess, the second accommodating recess, and the first through hole are in communication with one another. The first through hole is spaced apart from the liquid-injection hole. The end cover assembly further includes a lower plastic member and a pole. The lower plastic member is disposed on the second surface of the top cover. The lower plastic member includes a body portion, a first abutting portion protruding from a surface of the body portion facing the top cover, and a second abutting portion protruding from the surface of the first abutting portion facing the top cover. The first abutting portion is located in the first accommodating recess and abuts against the bottom wall and a side wall of the first accommodating recess. The second abutting portion is located in the second accommodating recess and abuts against the bottom wall portion and a side wall of the second accommodating recess. The lower plastic member further defines a second through hole that sequentially extends through the body portion, the first abutting portion, and the second abutting portion. The second through hole is defined corresponding to the first through hole. The pole has one part located at a side of the lower plastic member away from the top cover, and the other part sequentially extending through the second through hole and the first through hole and insulated from the top cover. The pole is configured to be electrically connected to the electrode assembly.

Further, the end cover assembly further includes a lower plastic member disposed on a side of the top cover away from the first surface. The lower plastic member includes a first plastic sub-member, a second plastic sub-member, a third plastic sub-member, and a fourth plastic sub-member. The first plastic sub-member and the second plastic sub-member are arranged at an interval in a first direction on a surface of the top cover away from the first surface. The first plastic sub-member defines a leakage hole at a position of the first plastic sub-member close to the second plastic sub-member. The leakage hole is in communication with the liquid-injection hole. The first plastic sub-member has a first peripheral side wall and a second peripheral side wall that are connected end-to-end and define the leakage hole. The first peripheral side wall is a cambered surface. The second peripheral side wall is a flat surface. The second peripheral side wall is closer to the second plastic sub-member than the first peripheral side wall. The third plastic sub-member and the fourth plastic sub-member are arranged at an interval in a second direction. The third plastic sub-member is connected to both the first plastic sub-member and the second plastic sub-member in a snap-fit manner. The fourth plastic sub-member is connected to both the first plastic sub-member and the second plastic sub-member in a snap-fit manner. The third plastic sub-member and the fourth plastic sub-member are both partially located between the first plastic sub-member and the second plastic sub-member. The first direction is perpendicular to the second direction.

Further, the top cover further has a second surface away from the first surface, and defines an explosion-proof hole extending through the first surface and the second surface. The explosion-proof hole is spaced apart from the liquid-injection hole. The end cover assembly further includes an explosion-proof sheet sealing the explosion-proof hole and connected to the top cover. The first plastic sub-member further defines a vent channel in communication with the leakage hole. The vent channel extends through both a surface of the first plastic sub-member facing the second plastic sub-member and a surface of the first plastic sub-member facing the top cover, and the vent channel is in communication with a side of the explosion-proof sheet facing the first plastic sub-member.

In a second aspect of the present disclosure, an energy-storage apparatus is provided. The energy-storage apparatus includes the end cover assembly described in the embodiments of the present disclosure, an adapter sheet, and an electrode assembly. The adapter sheet is disposed at a side of the top cover away from the first surface and has one end electrically connected to the end cover assembly. The electrode assembly is disposed at a side of the adapter sheet away from the end cover assembly. The electrode assembly is electrically connected to one end of the adapter sheet away from the end cover assembly.

In a third aspect of the present disclosure, an electricity-consumption device is provided. The electricity-consumption device includes an electricity-consumption device body and the energy-storage apparatus described in the embodiments of the present disclosure. The energy-storage apparatus supplies power to the electricity-consumption device body.

The end cover assembly according to the embodiments of the present disclosure includes the top cover. The top cover has the first surface and further defines the liquid-injection hole extending through the first surface. The first surface includes the first sub-surface and the second sub-surface connected to the first sub-surface. The first sub-surface is around the liquid-injection hole, the second sub-surface is around the periphery of the first sub-surface. The roughness of the first sub-surface is greater than the roughness of the second sub-surface. Since the roughness of the first sub-surface is greater than the roughness of the second sub-surface, when the sealing cap is subsequently welded to seal the liquid-injection hole, the reflection of laser by the top cover can be reduced, so as to reduce the laser absorptivity of the welding material of the top cover, avoiding the problem that the temperature cannot reach a welding temperature caused by the reduced laser absorptivity of the welding material due to the reflection of laser by the top cover. In addition, since the roughness of the first sub-surface is greater than the roughness of the second sub-surface, when a top patch is attached to the first surface of the top cover, gas between the top patch and the first sub-surface of the top cover can be discharged through a rough micro-gap of the first sub-surface to avoid formation of local bubbles, which can increase the binding force (i.e., the adhesive force) between the top patch and the first sub-surface, improving the sealing effect on the liquid-injection hole. Furthermore, during the process of filling the electrolyte into the energy-storage apparatus through the liquid-injection hole at high speed, a small amount of electrolyte will splash around the liquid-injection hole. However, the subsequent laser welding of the sealing cap requires high cleanliness of the metal surface. If there are impurities, such as the electrolyte or dust, remaining on the metal surface, when the laser beam scans to the impurities (e.g., the fine particles of electrolyte), the impurities will vaporize to explode instantly, which is likely to cause defects such as pores or splashes at the welded part.

### BRIEF DESCRIPTION OF THE DRAWINGS

To describe technical solutions in the present disclosure more clearly, the following briefly introduces the accompanying drawings required for describing implementations. Apparently, the accompanying drawings in the following description show merely some implementations of the present disclosure, and a person of ordinary skill in the art may still derive other drawings from these accompanying drawings without creative efforts.
FIG. 1 is a schematic structural diagram showing an electricity-consumption device according to an embodiment of the present disclosure, in which an energy-storage apparatus is separated from an electricity-consumption device body.
FIG. 2 is a schematic structural diagram showing an energy-storage apparatus according to an embodiment of the present disclosure.
FIG. 3 is an exploded schematic structural diagram showing an energy-storage apparatus according to an embodiment of the present disclosure.
FIG. 4 is a schematic structural diagram showing an end cover assembly according to an embodiment of the present disclosure.
FIG. 5 is a schematic structural diagram showing a top cover according to an embodiment of the present disclosure.
FIG. 6 is a partial enlarged view of the top cover shown in FIG. 5 according to an embodiment of the present disclosure.
FIG. 7 is a schematic structural diagram showing an end cover assembly according to another embodiment of the present disclosure.
FIG. 8 is an enlarged view of dashed box I in FIG. 7.
FIG. 9 is a schematic structural diagram showing an end cover assembly according to another embodiment of the present disclosure.
FIG. 10 is an enlarged view of dashed box II in FIG. 9.
FIG. 11 is a schematic structural diagram showing an end cover assembly according to yet another embodiment of the present disclosure.
FIG. 12 is an enlarged view of dashed box III in FIG. 11.
FIG. 13 is a schematic structural diagram showing a top cover according to yet another embodiment of the present disclosure.
FIG. 14 is a schematic structural diagram showing a top cover according to yet another embodiment of the present disclosure.
FIG. 15 is a schematic structural diagram showing the top cover shown in FIG. 14 according to an embodiment of the present disclosure from another perspective.
FIG. 16 is an exploded schematic structural diagram showing an end cover assembly according to an embodiment of the present disclosure.
FIG. 17 is an exploded schematic structural diagram showing the end cover assembly shown in FIG. 16 according to an embodiment of the present disclosure from another perspective.
FIG. 18 is an exploded schematic structural diagram showing an end cover assembly according to another embodiment of the present disclosure.
FIG. 19 is an exploded schematic structural diagram showing the end cover assembly shown in FIG. 18 according to an embodiment of the present disclosure from another perspective.
FIG. 20 is an enlarged view of dashed box IV in FIG. 19.

### Reference numerals:

300 - electricity-consumption device, 310 - electricity-consumption device body, 200 - energy-storage apparatus, 210 - electrode assembly, 211 - positive-electrode tab, 213 - negative-electrode tab, 230 - adapter sheet, 231 - positive-electrode adapter sheet, 233 - negative-electrode adapter sheet, 250 - housing, 100 - end cover assembly, 10 - top cover, 11 - first surface, 111 - first sub-surface, 113 - second sub-surface, 115 - abutting sub-surface, 12 - liquid-injection hole, 13 - second surface, 131 - third sub-surface, 133 - fourth sub-surface, 135 - fifth sub-surface, 14 - protrusion, 15 - groove, 16 - first accommodating recess, 17 - second accommodating recess, 18 - first through hole, 19 - explosion-proof hole, 21 - explosion-proof sheet, 23 - protective sheet, 30 - sealing cap, 31 - welding portion, 33 - first welding mark, 331 - first end portion, 333 - second end portion, 35 - second welding mark, 351 - third end portion, 353 - fourth end portion, 41 - positive-electrode metal pressing block, 43 - negative-electrode metal pressing block, 50 - lower plastic member, 51 - body portion, 52 - first abutting portion, 53 - second abutting portion, 54 - second through hole, 55 - first plastic sub-member, 551 - leakage hole, 552 - first peripheral side wall, 553 - second peripheral side wall, 554 - vent channel, 56 - second plastic sub-member, 57 - third plastic sub-member, 58 - fourth plastic sub-member, 61 - positive-electrode upper plastic member, 63 - negative-electrode upper plastic member, 70 - pole, 71 - positive pole, 73 - negative pole, 80 - sealing ring, 90 - sealing pin.

### DETAILED DESCRIPTION

To enable those skilled in the art to better understand the solutions of the present disclosure, the technical solutions in embodiments of the present disclosure will be clearly and completely described below in conjunction with the accompanying drawings in the embodiments of the present disclosure. Apparently, the described embodiments are merely some of, rather than all, the embodiments of the present disclosure. All other embodiments obtained by those of ordinary skill in the art based on the embodiments of the present disclosure without any creative effort shall fall within the scope of protection of the present disclosure.

The terms such as "first" and "second" in the specification and the claims of the present application and in the accompanying drawings are intended to distinguish different objects, rather than to describe a specific order. In addition, the terms of "include" and "have" and any variations thereof are intended to cover the non-exclusive inclusion. For example, the process, method, system, product or device, which includes a series of steps or units, is not limited to the listed steps or units, but optionally further includes unlisted steps or units, or optionally further includes other steps or units inherent to the process, method, product or device.

The technical solutions in the embodiments of the present disclosure will be described below with reference to the accompanying drawings.

It may be noted that, for ease of description, in the embodiments of the present disclosure, the same reference numerals denote the same components, and for the sake of brevity, the detailed description of the same components is omitted in different embodiments.

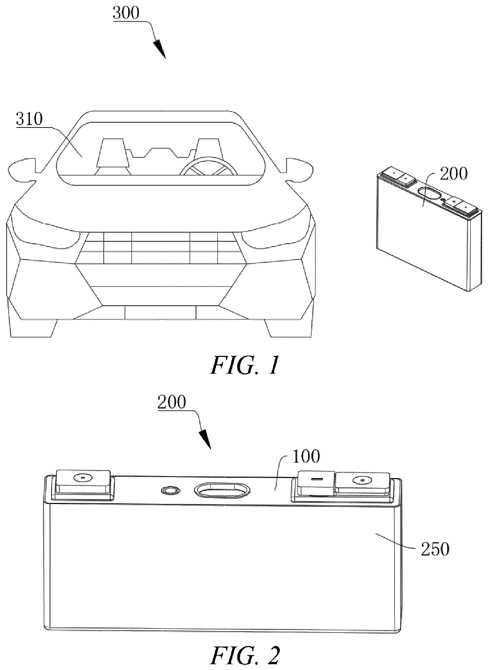

Referring to FIG. 1, an electricity-consumption device 300 is provided in embodiments of the present disclosure. The electricity-consumption device 300 includes an electricity-consumption device body 310 and an energy-storage apparatus 200. The energy-storage apparatus 200 supplies power to the electricity-consumption device body 310.

The electricity-consumption device 300 in the embodiments of the present disclosure may be, but not limited to, a portable electronic device, such as a mobile phone, a tablet computer, a laptop, a desktop computer, a smart bracelet, a smart watch, an e-book reader, and a game console. The electricity-consumption device 300 may also be transportation means such as an automobile, a truck, a car, a van, a bullet train, a high-speed train, and an electric bicycle. In addition, the electricity-consumption device 300 may also be various household appliances, etc. It can be understood that the electricity-consumption device 300 illustrated in the drawings of the present disclosure is only one of the forms of the electricity-consumption device 300, and may not be construed as a limitation on the electricity-consumption device 300 provided in the present disclosure.

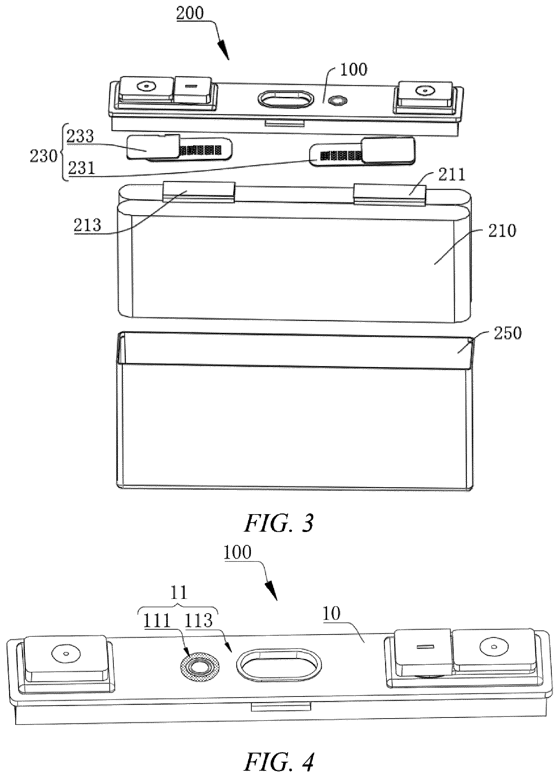

Referring to FIG. 2 and FIG. 3, an energy-storage apparatus 200 is provided in embodiments of the present disclosure. The energy-storage apparatus 200 includes an electrode assembly 210, an adapter sheet 230, and an end cover assembly 100. The adapter sheet 230 is electrically connected to the electrode assembly 210. The end cover assembly 100 is disposed at a side of the adapter sheet 230 away from the electrode assembly 210 and is electrically connected to the adapter sheet 230.

The energy-storage apparatus 200 of the embodiments of the present disclosure may be, but not limited to, a lithium-ion secondary battery, a lithium-ion primary battery, a lithium-sulfur battery, a sodium/lithium-ion battery, a sodium-ion battery or a magnesium-ion battery, an energy-storage battery, and other energy-storage apparatus 200. It can be understood that the energy-storage apparatus 200 illustrated in the drawings of the present disclosure is only one of the forms of the energy-storage apparatus 200, and may not be construed as a limitation on the energy-storage apparatus 200 provided in the present disclosure.

Optionally, the adapter sheet 230 may be, but not limited to, at least one of copper foil and aluminum foil.

Optionally, the adapter sheet 230 includes a positive-electrode adapter sheet 231 and a negative-electrode adapter sheet 233. The electrode assembly 210 includes a positive-electrode sheet (not shown), a separator (not shown) and a negative-electrode sheet (not shown) arranged in sequence. The positive-electrode sheet and the negative-electrode sheet are both electrically connected to the end cover assembly 100 by means of the adapter sheet 230. The positive-electrode sheet includes a positive current collector, a positive-electrode tab 211 electrically connected to the positive current collector, and a positive active layer disposed on a surface of the positive current collector. The positive-electrode sheet is electrically connected to the positive-electrode adapter sheet 231 by means of the positive-electrode tab 211. The negative-electrode sheet includes a negative current collector, a negative-electrode tab 213 electrically connected to the negative current collector, and a negative active layer disposed on a surface of the negative current collector. The negative-electrode sheet is electrically connected to the negative-electrode adapter sheet 233 by means of the negative-electrode tab 213.

It can be understood that the positive-electrode adapter sheet 231 and the negative-electrode adapter sheet 233 are different adapter sheets. The adapter sheet 230 for electrically connecting the positive-electrode tab 211 to the end cover assembly 100 is the positive-electrode adapter sheet 231, and the adapter sheet 230 for electrically connecting the negative-electrode tab 213 to the end cover assembly 100 is the negative-electrode adapter sheet 233.

In some embodiments, the energy-storage apparatus 200 of the present disclosure further includes a housing 250. The housing 250 is connected to the end cover assembly 100, and the housing 250 and the end cover assembly 100 cooperatively define an accommodating recess. The accommodating recess is used to accommodate the electrode assembly 210 and the adapter sheet 230.

In some embodiments, the energy-storage apparatus 200 of the present disclosure further includes an electrolyte (not shown). The electrolyte is accommodated in the accommodating recess, and at least part of the positive-electrode sheet and at least part of the negative-electrode sheet are immersed in the electrolyte.

After the components of the energy-storage apparatus are assembled, the electrolyte is filled through a liquid-injection hole of the end cover assembly. After the electrolyte is filled, the liquid-injection hole is plugged with a rubber tack, and a sealing cap made of metal is welded to a top cover by means of laser welding above the liquid-injection hole to achieve secondary sealing for the liquid-injection hole so as to prevent the electrolyte from overflowing.

The top cover is generally made of metal, such as 3-series aluminum alloy. Aluminum alloy is a non-ferrous metal that has strong reflectivity to all kinds of light. Laser, as a high-energy beam, is more likely to reflect on the surface of the aluminum alloy. In other words, aluminum alloy, a non-ferrous metal, has high reflectivity and low absorptivity for laser. In addition, all metals have thermal conductivity, so aluminum alloy also has strong thermal conductivity, and is easy to reflect laser or quickly transfer the heat of laser during laser welding, so that the temperature of the part to-be-welded cannot meet the welding requirements, eventually resulting in welding failure of the sealing cap. Thus, during laser welding of the sealing cap, it is necessary to strictly control the power density of laser and the movement speed during welding to prevent reflection or transfer of laser, and it is desired to weld aluminum alloy with extremely high energy density beam in a very short time, which can prevent the problems such as reflection.

In addition, during welding of the sealing cap, the laser absorption of the welding material depends on some important properties of the material, such as absorptivity, reflectivity, thermal conductivity, melting temperature, and evaporation temperature, in which the absorptivity is most important. The factors that affect the laser beam absorptivity of the material include two aspects. The first is the coefficient of resistance of the material. From the measurement of the absorptivity of the polished surface of the material, it has been found that the absorptivity of the material is directly proportional to the square root of the coefficient of resistance, and the coefficient of resistance varies with the temperature. Secondly, the surface state (or smoothness) of the material has an important influence on the beam absorptivity, and thus significantly influences the welding effect.

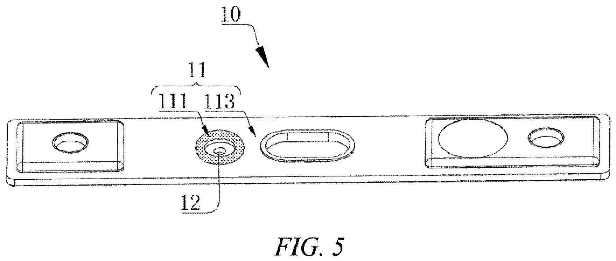

Referring to FIG. 4 and FIG. 5, an end cover assembly 100 is further provided in embodiments of the present disclosure. The end cover assembly 100 is for the energy-storage apparatus 200 and includes a top cover 10. The top cover 10 has a first surface 11, and the top cover 10 further defines a liquid-injection hole 12 extending through the first surface 11. The first surface 11 includes a first sub-surface 111 and a second sub-surface 113 connected to the first sub-surface 111, the first sub-surface 111 is around the liquid-injection hole 12, the second sub-surface 113 is around the periphery of the first sub-surface 111, and the roughness of the first sub-surface 111 is greater than the roughness of the second sub-surface 113.

It may be noted that when the end cover assembly 100 is mounted to the energy-storage apparatus 200, the top cover 10 is connected to the housing 250 to define the accommodating recess.

Optionally, the top cover 10 may be made of, but not limited to, aluminum or an aluminum alloy, etc. The end cover assembly 100 of the embodiments of the present disclosure includes the top cover 10. The top cover 10 has a first surface 11, and the top cover 10 further defines the liquid-injection hole 12 extending through the first surface 11. The first surface 11 includes a first sub-surface 111 and a second sub-surface 113 connected to each other, the first sub-surface 111 is around the liquid-injection hole 12, the second sub-surface 113 is around the periphery of the first sub-surface 111, and the roughness of the first sub-surface 111 is greater than the roughness of the second sub-surface 113. Since the roughness of the first sub-surface 111 is greater than the roughness of the second sub-surface 113, when the sealing cap is subsequently welded to seal the liquid-injection hole 12, the reflection of laser by the top cover 10 can be reduced, so as to reduce the laser absorptivity of the welding material of the top cover 10, avoiding the problem that the temperature cannot reach a welding temperature caused by the reduced laser absorptivity of the welding material due to the reflection of laser by the top cover 10. In addition, since the roughness of the first sub-surface 111 is greater than the roughness of the second sub-surface 113, when a top patch is attached to the first surface 11 of the top cover 10, gas between the top patch and the first sub-surface 111 of the top cover 10 can be discharged through a rough micro-gap of the first sub-surface 111 to avoid formation of local bubbles, which can increase the binding force (i.e., the adhesive force) between the top patch and the first sub-surface 111, improving the sealing effect on the liquid-injection hole 12. Furthermore, during the process of filling the electrolyte into the energy-storage apparatus 200 through the liquid-injection hole 12 at high speed, a small amount of electrolyte will splash around the liquid-injection hole 12. However, the subsequent laser welding of the sealing cap 30 requires high cleanliness of the metal surface. If there are impurities, such as the electrolyte or dust, remaining on the metal surface, when the laser beam scans to the impurities (e.g., the fine particles of electrolyte), the impurities will vaporize to explode instantly, which is likely to cause defects such as pores or splashes at the welded part.

Optionally, the first sub-surface 111 is formed by means of low-power laser scanning that removes impurities such as the electrolyte or dust remaining around the liquid-injection hole by ablation while forming the rough surface (i.e., the first sub-surface 111), so that the welding surface is cleaned in advance for the subsequent high-power laser welding process of the sealing cap 30 to improve the uniformity and sealing performance of welding, thereby prolonging the service life of the energy-storage apparatus 200.

Optionally, the sealing cap may be made of, but not limited to, aluminum or an aluminum alloy, etc.

Optionally, the roughness Ra of the first sub-surface 111 is in a range of 3.2 ≤ Ra ≤ 50. Specifically, the roughness Ra of the first sub-surface 111 may be, but not limited to, 3.2, 5, 8, 10, 15, 20, 25, 30, 35, 40, 45, 50, etc. If the roughness of the first sub-surface 111 is too small, the laser reflectivity of the first sub-surface 111 is excessively large, affecting the laser absorptivity of the laser welding material, so that during welding of the sealing cap to the top cover 10, the temperature cannot reach the welding temperature, affecting the sealing effect of the sealing cap on the liquid-injection hole 12. If the roughness of the first sub-surface 111 is too large, when the top patch is attached to the first surface 11, an adhesive layer for attaching the top patch is insufficient to extend into the bottom of a trench (i.e., the gap of the first sub-surface 111) for attachment, reducing the sealing performance of the liquid-injection hole 12.

In a specific embodiment, the first sub-surface 111 is a rough surface, and the second sub-surface 113 is a smooth surface (i.e., the surface that is smooth).

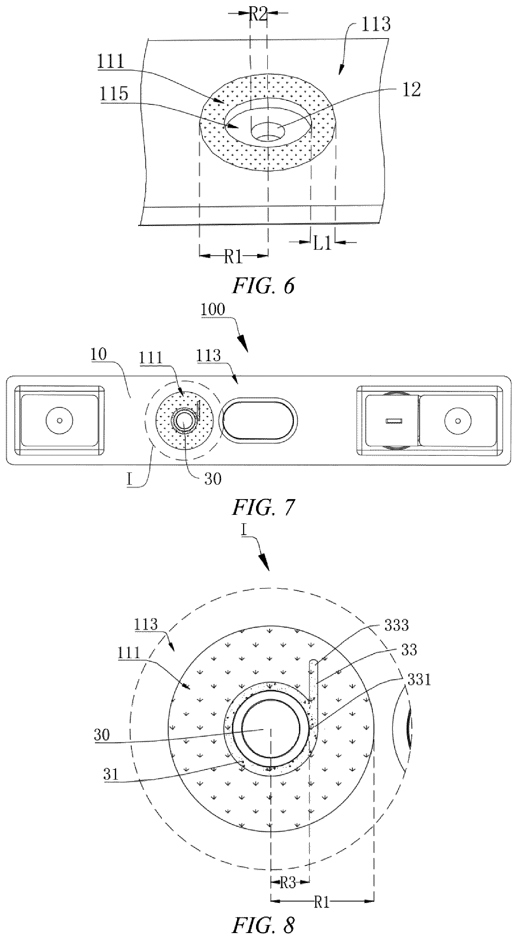

Referring to FIG. 6, in some embodiments, the first sub-surface 111 is annular, and the first sub-surface 111 has a linewidth L1 in a range of 1.5 mm ≤ L1 ≤ 8.5 mm. Specifically, the linewidth L1 of the first sub-surface 111 may be, but not limited to, 1.5 mm, 2.0 mm, 2.5 mm, 2.8 mm, 3.0 mm, 3.2 mm, 3.5 mm, 4 mm, 5 mm, 6 mm, 7 mm, 8 mm, 8.5 mm, etc. If the linewidth of the first sub-surface 111 is too small, the impurities such as the electrolyte are likely to splash out of the first sub-surface 111 during filling. The larger the linewidth of the first sub-surface 111 is, the more it can ensure that the error of the laser beam is within the range of the first sub-surface 111 during welding of the sealing cap to the liquid-injection hole 12, so as to avoid the problem that the temperature cannot reach a standard welding temperature caused by the reduced laser absorptivity of the welding material due to the reflection by the second sub-surface 113 (a clean surface). The excessively large linewidth of the first sub-surface 111 will cause the waste of laser scanning energy and also prolong the machining time, thus increasing the machining cost of the energy-storage apparatus 200.

Optionally, the first sub-surface 111 is annular, the liquid-injection hole 12 is circular, and the ratio of an outer radius R1 of the first sub-surface 111 to the radius R2 of the liquid-injection hole 12 is in a range of 1.2 ≤ R1/R2 ≤ 4.8. Specifically, the ratio of the outer radius R1 of the first sub-surface 111 to the radius R2 of the liquid-injection hole 12 may be, but not limited to, 1.2, 1.5, 1.8, 2.0, 2.5, 2.8, 3.0, 3.2, 3.5, 3.75, 4.0, 4.25, 4.5, 4.8, etc. The larger the diameter of the liquid-injection hole 12 is, the more electrolyte passing through per unit time, and the further the electrolyte splashed outwards. If R1/R2 is too small, the electrolyte is likely to splash out of the first sub-surface 111 during filling. The excessively large R1/R2 will cause the waste of laser canning energy and also prolong the machining time, thus increasing the cost of the energy-storage apparatus 200.

Referring to FIG. 7 and FIG. 8, in some embodiments, the end cover assembly 100 further includes a sealing cap 30 and an annular welding portion 31 located at the junction between the sealing cap 30 and the top cover 10. The sealing cap 30 seals the liquid-injection hole 12 and is connected to the top cover 10. The top cover 10 is further provided with a first welding mark 33 located at the first sub-surface 111. The first welding mark 33 includes a first end portion 331 and a second end portion 333 opposite to the first end portion 331. The first end portion 331 is connected to the welding portion 31, and the second end portion 333 is located outside the periphery of the welding portion 31 and is spaced apart from the welding portion 31.

It may be noted that the welding portion 31 and the first welding mark 33 are both formed during welding of the sealing cap 30 and the top cover 10. During welding of the sealing cap 30 to the top cover 10, the welding material is welded a circle around the periphery of the sealing cap 30 to form the annular welding portion 31, and after the annular welding portion 31 is formed, welding is continued on the top cover 10 to form the first welding mark 33. It can be understood that the first welding mark 33 is the ending point of laser welding.

During laser welding of the sealing cap 30 to the top cover 10, there is a large shrinkage force before the welding material is completely solidified, so that at the end of welding, the relatively large temperature difference at the end is likely to cause end cracks. The arrangement of the first welding mark 33 at a position away from the annular welding portion 31 (there is no need for welding two materials together) can allow the whole annular welding portion 31 to be uniform, improving the sealing performance of the liquid-injection hole 12. The arrangement of the starting and ending points of welding on the first sub-surface 111 outside the welding portion 31 can better prevent the risk of sealing failure due to fine cracks caused by the concentration of stress of the welding portion 31 on the part-to-be welded.

Optionally, the second end portion 333 is located within the range of the first sub-surface 111. This can better prevent the second sub-surface 113 from reflecting laser after the welding is outside the range of the first sub-surface 111 (i.e., the welding reaching the second sub-surface 113).

Optionally, before the sealing cap 30 is welded, the surface of the top cover 10 is cleaned. The aluminum alloy is active and is easy to be oxidized, and a large amount of dust, moisture, etc. are likely to adhere to its surface, so that during welding, if it is not prepared well, the matters adhered to the surface will easily remain on the surface of the aluminum alloy along with the rapid laser welding, thus affecting the quality and welding effect of the aluminum alloy. Therefore, before welding of the aluminum alloy, it is necessary to clean the surface of the aluminum alloy to remove oil stains and the like on the surface. Also, in order to prevent safety threats, such as explosion, caused by oxidation during welding, it is also necessary to thoroughly clean the metal surface to completely remove the oxide film.

In some embodiments, the first sub-surface 111 is annular, the sealing cap 30 is circular, and the ratio of the outer radius R1 of the first sub-surface 111 to the radius R3 of the sealing cap 30 is in a range of 1.45 ≤ R1/R3 ≤ 3.65. Specifically, the ratio of the outer radius R1 of the first sub-surface 111 to the radius R3 of the sealing cap 30 may be, but not limited to, 1.45, 1.6, 1.75, 1.88, 2.0, 2.25, 2.5, 2.8, 3.0, 3.2, 3.4, 3.65, etc. If the ratio of the outer radius R1 of the first sub-surface 111 to the radius R3 of the sealing cap 30 is too small, the linewidth of the first sub-surface 111 is insufficient for close attachment of the top patch to the first sub-surface 111 during attachment of the top patch. If the ratio of the outer radius R1 of the first sub-surface 111 to the radius R3 of the sealing cap 30 is large, the linewidth of the first sub-surface 111 is too large, so that when the top patch is attached, the gas between the top patch and the first sub-surface 111 of the top cover 10 cannot be completely discharged through the rough micro-gap of the first sub-surface 111, which is likely to form local bubbles, reducing the sealing effect on the liquid-injection hole 12. When the ratio of the outer radius R1 of the first sub-surface 111 to the radius R3 of the sealing cap 30 is 1.45 to 3.65, it is possible to ensure that the linewidth is sufficient to enhance the close attachment of the top patch to the first sub-surface 111, and also avoid excessively large linewidth of the first sub-surface 111 that will reduce the sealing effect on the liquid-injection hole 12 due to formation of local bubbles caused by the gas between the top patch and the first sub-surface 111 of the top cover 10 being unable to be completely discharged through the rough micro-gap of the first sub-surface 111 during attachment of the top patch.

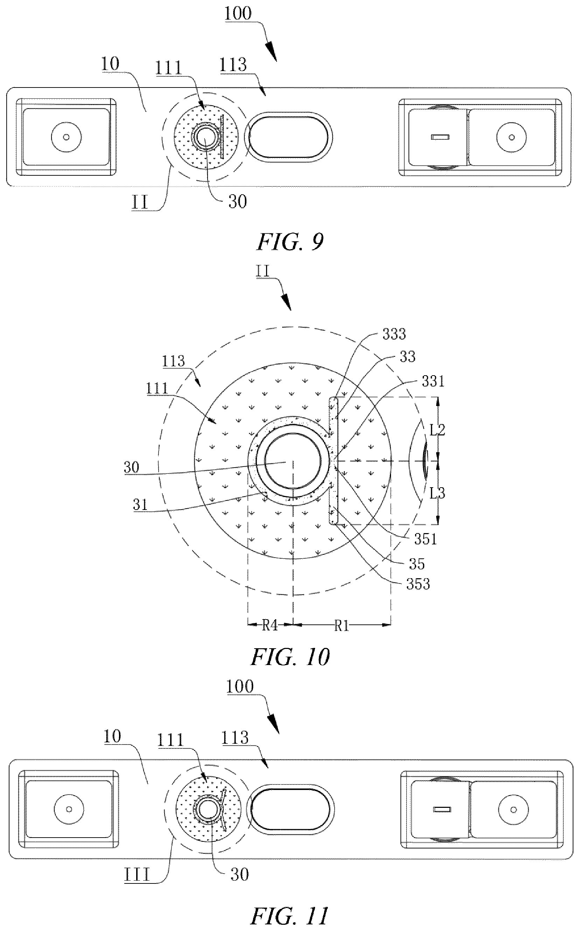

Referring to FIG. 9 and FIG. 10, in some embodiments, the top cover 10 is further provided with a second welding mark 35 located at the first sub-surface 111. The second welding mark 35 includes a third end portion 351 and a fourth end portion 353 opposite to the fourth end portion 353, the third end portion 351 is connected to the welding portion 31, and the fourth end portion 353 is located at the periphery of the welding portion 31 and is spaced apart from the welding portion 31. The first end portion 331 is spaced apart from or overlapped with the third end portion 351, and the second end portion 333 and the fourth end portion 353 are respectively arranged at two opposite sides of a line connecting the first end portion 331 and the center of the liquid-injection hole 12.

It may be noted that, in this embodiment, the welding portion 31, the first welding mark 33, and the second welding mark 35 are each formed when the sealing cap 30 is welded to the top cover 10. When the sealing cap 30 is welded to the top cover 10, the second welding mark 35 is firstly formed at the side of the first sub-surface 111 of the top cover 10 away from the sealing cap 30, the annular welding portion 31 is then formed between the sealing cap 30 and the top cover 10, and the first welding mark 33 is finally formed at the side of the first sub-surface 111 of the top cover 10 away from the annular welding portion 31. The first welding mark 33 and the second welding mark 35 are approximate to line segments of a straight line that each are roughly tangent to the annular welding portion 31. It can be understood that the first welding mark 33 is the ending point of laser welding, and the second welding mark 35 is a starting point of laser welding.

During welding of the sealing cap 30, when laser welding is performed at the starting position, the temperature of the welding material is not enough, so that the material to be welded cannot reach a molten state desired for good welding, reducing the sealing performance of the liquid-injection hole 12. The arrangement of the second welding mark 35 can allow welding to be performed at a high welding temperature when the welding portion 31 is formed, so that the sealing cap 30 can be better welded to the top cover 10 to better seal the liquid-injection hole 12. Also, in order to also shorten the welding process time (i.e., it is unexpected to prolong the movement time of a laser head during initial welding), the starting point of welding is also set on the outside of the annular welding portion 31, so as to minimize the welding stroke while ensuring the sufficient temperature during forming of the welding portion 31 by welding, thereby improving the welding efficiency.

In other embodiments, the problem of insufficient initial welding temperature can be solved by means of reducing the movement speed of the laser head or welding a circle from the initial position and then surrounding and covering a small section of the initial welded part to achieve uniform welding, and it is not necessary to space the starting point away.

Optionally, the welding portion 31 is annular, the length L2 of the first welding mark 33 satisfies $1.5 mm ⩽ L 2 ⩽ \sqrt{R {1}^{2} - R {4}^{2}}$, andthe length L3 of the second welding mark 35 satisfies $1.5 mm ⩽ L 3 ⩽ \sqrt{R {1}^{2} - R {4}^{2}}$ , where R1 is the outer radius of the first sub-surface 111, and R4 is the outer radius of the welding portion 31. In this way, when the welding portion 31 is formed by welding, the temperature is sufficient, so that the sealing cap 30 can be better welded to the top cover 10 to better seal the liquid-injection hole 12, and the first welding mark 33 and the second welding mark 35 can also be controlled within the range of the first sub-surface 111, avoiding the problem of light reflection during welding due to the marks being beyond the range of the first sub-surface 111.

Optionally, the length L2 of the first welding mark 33 is in a range of 1.5 mm ≤ L2 ≤ 5.5 mm; and specifically, the length L2 of the first welding mark 33 may be, but not limited to, 1.5 mm, 2 mm, 2.5 mm, 3 mm, 3.5 mm, 4 mm, 4.5 mm, 5 mm, 5.5 mm, etc. If the first welding mark 33 is too short, it is likely to cause end cracks, affecting welding of the sealing cap 30 to the top cover 10, thus affecting the sealing effect. If the first welding mark 33 is too long and is out of the range of the first sub-surface 111, it is likely to cause the problem of light reflection during welding.

Optionally, the length L3 of the second welding mark 35 is in a range of 1.5 mm ≤ L3 ≤ 5.5 mm. Specifically, the length L3 of the second welding mark 35 may be, but not limited to, 1.5 mm, 2 mm, 2.5 mm, 3 mm, 3.5 mm, 4 mm, 4.5 mm, 5 mm, 5.5 mm, etc. If the second welding mark 35 is too short, the temperature of the welding material is insufficient during forming of the welding portion 31 by welding, which affects welding of the sealing cap 30 to the top cover 10, thus affecting the sealing effect. If the second welding mark 35 is too long and is out of the range of the second sub-surface 113, it is likely to cause the problem of light reflection during welding.

In a specific embodiment, the welding portion 31 is annular, the first welding mark 33 and the second welding mark 35 are straight, and the first welding mark 33 and the second welding mark 35 are both tangent to the welding portion 31. The first welding mark 33 and the second welding mark 35 are straight, and the straight welding marks can shorten the movement path of the laser welding head, improving the welding efficiency.

In another specific embodiment, the welding portion 31 is annular, and the first welding mark 33 is straight and is tangent to the welding portion 31; and the second welding mark 35 is arc, and the second welding mark 35 is tangent to the welding portion 31. When the sealing cap 30 is welded to the top cover 10 for laser welding, it is not necessary to align the starting position to a specific position, and the position tangent to the sealing cap 30 may be adjusted by means of an arc, so that the welding operation is more convenient, and the requirement for the accuracy of the starting position is low.

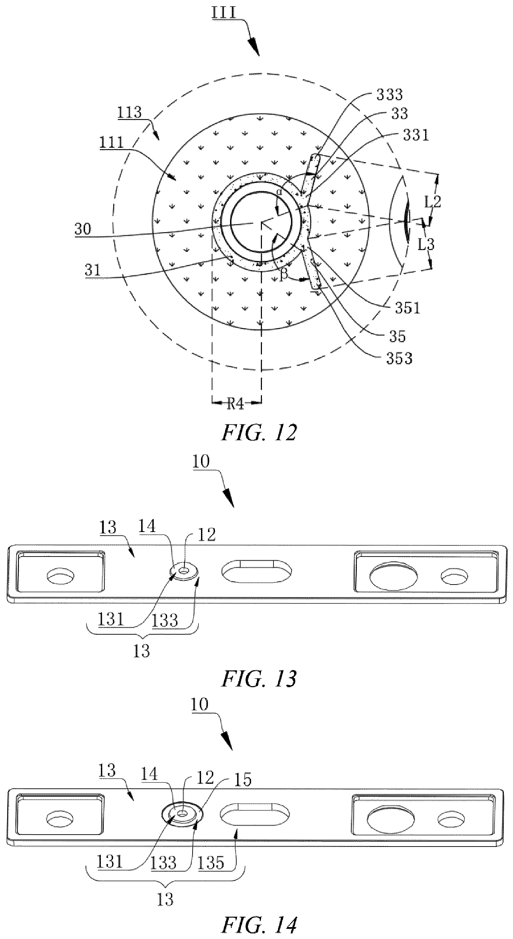

Referring to FIG. 11 and FIG. 12, in some embodiments, the ratio of an outer radius R4 of the welding portion 31 to the length L2 of the first welding mark 33 is in a range of 0.4 ≤ R4/L2 ≤ 2.8. Specifically, the ratio of the outer radius R4 of the welding portion 31 to the length L2 of the first welding mark 33 may be, but not limited to, 0.4, 0.6, 0.8, 1.0, 1.2, 1.4, 1.6, 1.8, 2.0, 2.2, 2.4, 2.6, 2.8, etc. If the ratio of the outer radius R4 of the welding portion 31 to the length L2 of the first welding mark 33 is too large, the first welding mark 33 is too short, which is likely to cause end cracks, affecting welding of the sealing cap 30 on the top cover 10, thus affecting the sealing effect. If the ratio of the outer radius R4 of the welding portion 31 to the length L2 of the first welding mark 33 is too small, the first welding mark 33 is too long and is out of the range of the first sub-surface 111, it is likely to cause the problem of light reflection during welding. When the ratio of the outer radius R4 of the welding portion 31 to the length L2 of the first welding mark 33 is 0.4 to 2.8, during forming of the welding portion 31 by welding, the temperature is sufficient, so that the sealing cap 30 can be better welded to the top cover 10 to better seal the liquid-injection hole 12, and the first welding mark 33 can also be controlled within the range of the first sub-surface 111, avoiding the problem of light reflection during welding due to the marks being beyond the range of the first sub-surface 111.

Optionally, in some embodiments, the first welding mark 33 is straight, and an angle α between a line connecting the center of the sealing cap 30 and the first end portion 331 and the first welding mark 33 is in a range of 70° ≤ α ≤ 120°. Specifically, the angle α between the line connecting the center of the sealing cap 30 and the first end portion 331 and the first welding mark 33 may be, but not limited to, 70°, 75°, 80°, 85°, 90°, 95°, 100°, 105°, 110°, 115°, 120°, etc. In this angle range, the path of laser welding is smoother, so as to avoid reduction of the overall welding uniformity and reduction of the sealing performance of welding caused by the accumulation of molten metal at the welded part due to a relatively large turning angle.

In some embodiments, the ratio of the outer radius R4 of the welding portion 31 to the length L3 of the second welding mark 35 is in a range of 0.4 ≤ R4/L3 ≤ 2.8. Specifically, the ratio of the outer radius R4 of the welding portion 31 to the length L3 of the second welding mark 35 may be, but not limited to, 0.4, 0.6, 0.8, 1.0, 1.2, 1.4, 1.6, 1.8, 2.0, 2.2, 2.4, 2.6, 2.8, etc. If the ratio of the outer radius R4 of the welding portion 31 to the length L2 of the second welding mark 35 is too large, the second welding mark 35 is too short, which is likely to cause end cracks, affecting welding of the sealing cap 30 to the top cover 10, thus affecting the sealing effect. If the ratio of the outer radius R4 of the welding portion 31 to the length L2 of the second welding mark 35 is too small, the second welding mark 35 is too long and is out of the range of the first sub-surface 111, which is likely to cause the problem of light reflection during welding. When the ratio of the outer radius R4 of the welding portion 31 to the length L2 of the second welding mark 35 is 0.4 to 2.8, during forming of the welding portion 31 by welding, the temperature is sufficient, so that the sealing cap 30 can be better welded to the top cover 10 to better seal the liquid-injection hole 12, and the second welding mark 35 can also be controlled within the range of the first sub-surface 111, avoiding the problem of light reflection during welding due to the marks being beyond the range of the first sub-surface 111.

Optionally, the second welding mark 35 is straight, and an angle β between a line connecting the center of the sealing cap 30 and the third end portion 351 and the second welding mark 35 is in a range of 70° ≤ β ≤ 120°. Specifically, the angle β between the line connecting the center of the sealing cap 30 and the third end portion 351 and the second welding mark 35 may be, but not limited to, 70°, 75°, 80°, 85°, 90°, 95°, 100°, 105°, 110°, 115°, 120°, etc. In this angle range, the path of laser welding is smoother, so as to avoid reduction of the overall welding uniformity and reduction of the sealing performance of welding caused by the accumulation of molten metal at the welded part due to a relatively large turning angle.

Referring to FIG. 6 again, optionally, the first surface 11 further includes an abutting sub-surface 115. The abutting sub-surface 115 is around the periphery of the liquid-injection hole 12, the first sub-surface 111 is around the periphery of the abutting sub-surface 115 and is connected to the abutting sub-surface 115, and when the sealing cap 30 is arranged on the first surface 11, the sealing cap 30 abuts against the abutting sub-surface 115. By means of providing the abutting sub-surface 115, the sealing cap 30 abuts against the abutting sub-surface 115, such that the liquid-injection hole 12 can be better sealed.

Optionally, the abutting sub-surface 115 is recessed from the first sub-surface 111, the sealing cap 30 is located in a recess formed by the abutting sub-surface 115, and the surface of the sealing cap 30 close to the first surface 11 is flush with the first sub-surface 111. This can prevent the sealing cap 30 from exceeding the top cover 10, so that the surface of the top cover 10 is flatter and can thus be better attached to the top patch during attachment of the top patch, so that the liquid-injection hole 12 can be better sealed.

It can be understood that the liquid-injection hole 12 extends through the abutting sub-surface 115.

Referring to FIG. 13, in some embodiments, the top cover 10 further has a second surface 13 away from the first surface 11, and the liquid-injection hole 12 further extends through the second surface 13. The second surface 13 includes a third sub-surface 131 and a fourth sub-surface 133 connected to the third sub-surface 131. The third sub-surface 131 is around the periphery of the liquid-injection hole 12, the fourth sub-surface 133 is around the periphery of the third sub-surface 131, and the third sub-surface 131 exceeds the fourth sub-surface 133 to form a protrusion 14.

It may be noted that when the end cover assembly 100 is for the energy-storage apparatus 200, the first surface 11 is closer to an appearance surface of the energy-storage apparatus 200 than the second surface 13, that is, the surface to which the top patch is attached.

In this embodiment, when the end cover assembly 100 is mounted to the energy-storage apparatus 200, when the electrolyte is filled through the liquid-injection hole 12, the electrolyte is filled into the energy-storage apparatus 200 from the side of the liquid-injection hole 12 close to the first surface 11, and the protrusion 14 provided on the second surface 13 has the effect of guiding and limiting the electrolyte and can better prevent the electrolyte from flowing to the second surface 13 of the top cover 10, which will cause the waste of the electrolyte and increase the risk of corrosion of the top cover 10.

Referring to FIG. 14, in other embodiments, the second surface 13 further includes a fifth sub-surface 135. The fifth sub-surface 135 is around the periphery of the fourth sub-surface 133 and is connected to the fourth sub-surface 133, the fifth sub-surface 135 exceeds the fourth sub-surface 133, the third sub-surface 131 exceeds the fifth sub-surface 135, and the third sub-surface 131 exceeds the fourth sub-surface 133 to form the protrusion 14. The third sub-surface 131, the fourth sub-surface 133, and the fifth sub-surface 135 cooperatively define a groove 15 around the protrusion 14. It can be understood that the third sub-surface 131, the fourth sub-surface 133, and the fifth sub-surface 135 are sequentially connected to one another. When the end cover assembly 100 is mounted to the energy-storage apparatus 200, when the electrolyte is filled through the liquid-injection hole 12, since the groove 15 is defined at the periphery of the protrusion 14, when the electrolyte accidentally flows to the second surface 13, the groove 15 allows the electrolyte to be retained in the groove 15, so as to prevent the electrolyte from continuing to spread to the fifth sub-surface 135, causing the waste of the electrolyte and corroding the top cover 10.

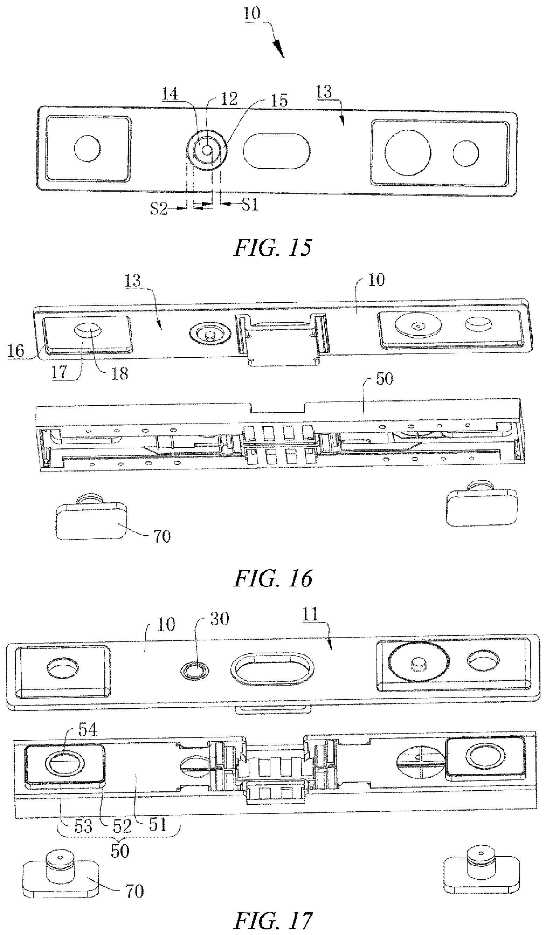

Referring to FIG. 15, optionally, the protrusion 14 has a linewidth S1 in a range of 2.2 mm ≤ S1 ≤ 3.6 mm; and specifically, the linewidth S1 of the protrusion 14 may be, but not limited to, 2.2 mm, 2.4 mm, 2.7 mm, 2.8 mm, 3.0 mm, 3.2 mm, 3.6 mm, etc. Before the sealing cap 30 is welded to the liquid-injection hole 12, the liquid-injection hole 12 is plugged with a sealing plug (e.g., a rubber plug), the sealing cap 30 is then arranged on the first surface 11, and the sealing cap 30 is welded. If the linewidth S1 of the protrusion 14 is too large, the recessed space is too large, and after the liquid-injection hole 12 is plugged with the rubber plug, there is still a space for radial movement, reducing the sealing performance of the liquid-injection hole 12. If the linewidth S1 of the protrusion 14 is too small, the accommodating space provided for a convex cap at the top of the rubber plug of the liquid-injection hole 12 is insufficient, so that the sealing cap 30 is prone to protruding from the first surface 11 of the top cover 10 after the sealing cap 30 is welded. When the linewidth S1 of the protrusion 14 is between 2.2 mm and 3.6 mm, it is possible to provide enough space for the convex cap at the top of the rubber plug of the liquid-injection hole 12, so that the whole sealing cap 30 (i.e., an aluminum cover sheet of the liquid-injection hole 12) after closing for sealing is flush with the first surface 11 of the top cover 10, and it is also possible to avoid reduction of the sealing performance which is caused by the presence of a radial movement space due to an excessively large recessed space after the liquid-injection hole 12 is plugged with the rubber plug.

Optionally, the groove 15 has a linewidth S2 in a range of 1.2 mm ≤ S2 ≤ 4.6 mm. Specifically, the linewidth S2 of the groove 15 may be, but not limited to 1.2 mm, 1.5 mm, 1.7 mm, 2.2 mm, 2.4 mm, 2.7 mm, 2.8 mm, 3.0 mm, 3.2 mm, 3.6 mm, 3.8 mm, 4.0 mm, 4.2 mm, 4.6 mm, etc. If the linewidth S2 of the groove 15 is too small, the width is not enough to well prevent the electrolyte from spreading to the outside of the groove 15 to cause the waste of the electrolyte. If the linewidth S2 of the groove 15 is too large, the structural strength of the top cover 10 turning around the liquid-injection hole 12 will be reduced, which is likely to cause protruding deformation during subsequent use. When the linewidth S2 of the groove 15 is 1.2 mm to 4.6 mm, the groove 15 may have a sufficient width such that the electrolyte will not spread to the outside of the groove 15 to cause the waste of the electrolyte, and it is also possible to prevent the protruding deformation during subsequent use due to the reduction of the structural strength of the top cover 10 turning around the liquid-injection hole 12.

Referring to FIG. 3, FIG. 16, and FIG. 17, in some embodiments, the energy-storage apparatus 200 further includes an electrode assembly 210. The top cover 10 further has a second surface 13 away from the first surface 11, and the liquid-injection hole 12 further extends through the second surface 13. The top cover 10 further defines a first accommodating recess 16 from the second surface 13, a second accommodating recess 17 recessed from a bottom wall of the first accommodating recess 16, and a first through hole 18 extending through both a bottom wall of the second accommodating recess 17 and the first surface 11. The first accommodating recess 16, the second accommodating recess 17, and the first through hole 18 are in communication with one another, and the first through hole 18 is spaced apart from the liquid-injection hole 12. The end cover assembly 100 further includes a lower plastic member 50 and a pole 70. The lower plastic member 50 is arranged on the second surface 13 of the top cover 10. The lower plastic member 50 includes a body portion 51, a first abutting portion 52 protruding from the surface of the body portion 51 facing the top cover 10, and a second abutting portion 53 protruding from the surface of the first abutting portion 52 facing the top cover 10. The first abutting portion 52 is located in the first accommodating recess 16 and abuts against the bottom wall of the first accommodating recess 16 and a side wall of the first accommodating recess 16. The second abutting portion 53 is located in the second accommodating recess 17 and abuts against the bottom wall of the second accommodating recess 17 and a side wall of the second accommodating recess 17. The lower plastic member 50 further defines a second through hole 54 sequentially extending through the body portion 51, the first abutting portion 52, and the second abutting portion 53. The second through hole 54 is defined corresponding to the first through hole 18. The pole 70 has one part located on the side of the lower plastic member 50 away from the top cover 10, and the other part sequentially extending through the second through hole 54 and the first through hole 18 and insulated from the top cover 10, and the pole 70 is configured to be electrically connected to the electrode assembly 210. By means of the interference fit between the first abutting portion 52 and the first accommodating recess 16 and the interference fit between the second abutting portion 53 and the second accommodating recess 17, it is possible to improve the sealing performance of a fitting surface between the lower plastic member 50 and the top cover 10 to prevent the electrolyte from flowing to a through hole of the pole 70 through the gap between the lower plastic member 50 and the top cover 10, which can improve the sealing performance of the end cover assembly 100 and thus prolong the service life of the energy-storage apparatus.

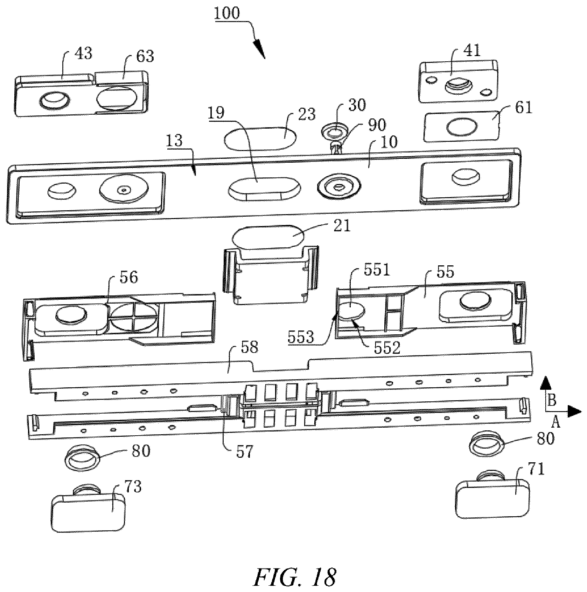

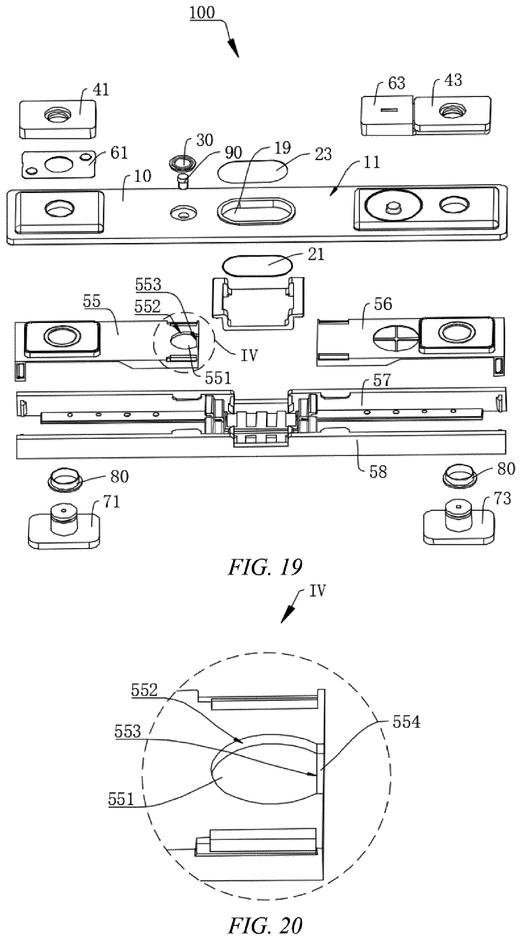

Referring to FIG. 18 and FIG. 19, in some embodiments, the end cover assembly 100 further includes a lower plastic member 50. The lower plastic member 50 is disposed at the side of the top cover 10 away from the first surface 11. The lower plastic member 50 includes a first plastic sub-member 55, a second plastic sub-member 56, a third plastic sub-member 57, and a fourth plastic sub-member 58. The first plastic sub-member 55 and the second plastic sub-member 56 are arranged at an interval in a first direction on the surface of the top cover 10 away from the first surface 11 (as shown by arrow A in FIG. 18). The first plastic sub-member 55 defines a leakage hole 551 at a position of first plastic sub-member 55 close to the second plastic sub-member 56, and the leakage hole 551 is in communication with the liquid-injection hole 12. The first plastic sub-member 55 has a first peripheral side wall 552 and a second peripheral side wall 553 that are connected end-to-end and define the leakage hole 551. The first peripheral side wall 552 is a cambered surface, the second peripheral side wall 553 is a flat surface, and the second peripheral side wall 553 is closer to the second plastic sub-member 56 than the first peripheral side wall 552. The third plastic sub-member 57 and the fourth plastic sub-member 58 are arranged at an interval in a second direction (as shown by arrow B in FIG. 18). The third plastic sub-member 57 is connected to both the first plastic sub-member 55 and the second plastic sub-member 56 in a snap-fit manner, and the fourth plastic sub-member 58 is connected to both the first plastic sub-member 55 and the second plastic sub-member 56 in a snap-fit manner. The third plastic sub-member 57 and the fourth plastic sub-member 58 are both partially located between the first plastic sub-member 55 and the second plastic sub-member 56, where the first direction is perpendicular to the second direction. Since the leakage hole 551 is at a position next to an explosion-proof hole of the top cover 10, providing the flat second peripheral side wall 553 at the position of the side wall of the leakage hole 551 can reduce the length of the first plastic sub-member 55 in the first direction, so as to better provide avoidance for the third plastic sub-member 57 and the fourth plastic sub-member 58, so that the flow channel formed by the part of the top cover 10 corresponding to the explosion-proof hole and the lower plastic member 50 may be symmetrical, and thus the airflow pressure exerted on an explosion-proof sheet arranged on the explosion-proof hole can be more uniform.

In a specific embodiment, the second peripheral side wall 553 is parallel to the surface of the first plastic sub-member 55 facing the second plastic sub-member 56. In another specific embodiment, the second peripheral side wall 553, the surface of the first plastic sub-member 55 facing the second plastic sub-member 56, and the surface of the second plastic sub-member 56 facing the first plastic sub-member 55 are parallel to one another. In this way, the first plastic sub-member 55 and the second plastic sub-member 56 each have more regular appearance, which can better provide avoidance for the third plastic sub-member 57 and the fourth plastic sub-member 58. In addition, since the first plastic sub-member 55 and the second plastic sub-member 56 are equal in length in the first direction, the third plastic sub-member 57 and the fourth plastic sub-member 58 can be made symmetrical in the second direction, so that during assembly, the third plastic sub-member 57 and the fourth plastic sub-member 58 can be assembled interchangeably, reducing the assembly accuracy.

Also referring to FIG. 20, in some embodiments, the top cover 10 further has a second surface 13 away from the first surface 11, and defines an explosion-proof hole 19 extending through the first surface 11 and the second surface 13, the explosion-proof hole 19 is spaced apart from the liquid-injection hole 12. The end cover assembly 100 further includes an explosion-proof sheet 21. The explosion-proof sheet 21 seals the explosion-proof hole 19 and is connected to the top cover 10. The first plastic sub-member 55 further defines a vent channel 554 in communication with the leakage hole 551. The vent channel 554 extends through both the surface of the first plastic sub-member 55 facing the second plastic sub-member 56 and the surface of the first plastic sub-member 55 facing the top cover 10, and the vent channel 554 is in communication with the side of the explosion-proof sheet 21 facing the first plastic sub-member 55. A gas chamber is enclosed by the explosion-proof sheet 21, the top cover 10 and the lower plastic member 50, and the vent channel 554 is in communication with the gas chamber, such that the gas in the energy-storage apparatus 200 can pass through the leakage hole 551 and the vent channel 554 to reach the gas chamber on the side of the explosion-proof sheet 21 facing the lower plastic member. By means of defining the vent channel 554 in communication with the leakage hole 551 and allowing the vent channel 554 to extend through both the surface of the first plastic sub-member 55 facing the second plastic sub-member 56 and the surface of the first plastic sub-member 55 facing the top cover 10, an air flow channel by which the leakage hole 551 of the lower plastic member 50 is in communication with the gas chamber below the explosion-proof sheet 21 can be defined, increasing the number of channels for gas accumulation.

Optionally, the explosion-proof sheet 21 is provided with scorings (not shown), such that when the internal pressure of the energy-storage apparatus 200 increases to reach a certain value, a fracture will occur for blasting to release pressure of the energy-storage apparatus 200.

In some embodiments, the end cover assembly 100 in the embodiment of the present disclosure further includes a protective sheet 23. The protective sheet 23 is arranged on the side of the explosion-proof sheet 21 away from the lower plastic member 50 (i.e., the side of the first surface 11 of the top cover 10) to seal the explosion-proof hole 19 and protect the explosion-proof sheet 21, so as to prevent the electrolyte inside the energy-storage apparatus 200 from overflowing caused by foreign objects hitting the explosion-proof sheet 21 and damaging the explosion-proof sheet 21.

In some embodiments, the end cover assembly 100 in the embodiments of the present disclosure further includes a top patch (not shown). The top patch is arranged on the first surface 11 of the top cover 10 and the sealing cap 30.

Referring to FIG. 18 and FIG. 19, in some embodiments, the end cover assembly 100 in the embodiments of the present disclosure further includes a positive-electrode metal pressing block 41 and a negative-electrode metal pressing block 43. The positive-electrode metal pressing block 41 and the negative-electrode metal pressing block 43 are arranged at an interval on the side of the first surface 11 of the top cover 10 and are respectively insulated from the top cover 10, the positive-electrode metal pressing block 41 is electrically connected to the positive-electrode adapter sheet 231, and the negative-electrode metal pressing block 43 is electrically connected to the negative-electrode adapter sheet 233. The positive-electrode metal pressing block 41 and the negative-electrode metal pressing block 43 cooperate to achieve electrical connection or conduction between the energy-storage apparatus 200 and the external electricity-consumption device or a further energy-storage apparatus 200.

In some embodiments, the end cover assembly 100 in the embodiments of the present disclosure further includes a positive-electrode upper plastic member 61 and a negative-electrode upper plastic member 63. The positive-electrode upper plastic member 61 is at least partially located between the positive-electrode metal pressing block 41 and the top cover 10 to insulate the positive-electrode metal pressing block 41 from the top cover 10. The negative-electrode upper plastic member 63 is at least partially located between the negative-electrode metal pressing block 43 and the top cover 10 to insulate the negative-electrode metal pressing block 43 from the top cover 10.

Optionally, the positive-electrode upper plastic member 61 may be, but not limited to, an insulating component such as a resin or rubber. The negative-electrode upper plastic member 63 may be, but not limited to, an insulating component such as a resin or rubber.

In some embodiments, the end cover assembly 100 in the embodiments of the present disclosure further includes a positive pole 71 and a negative pole 73. The positive pole 71 sequentially penetrates through the lower plastic member 50, the top cover 10, the positive-electrode upper plastic member 61, and the positive-electrode metal pressing block 41 and is welded to the positive-electrode metal pressing block 41, and the end of the positive pole 71 away from the metal pressing block is welded to the positive-electrode adapter sheet 231 to achieve electrical connection between the positive-electrode metal pressing block 41 and a positive-electrode sheet. The negative pole 73 sequentially penetrates through the lower plastic member 50, the top cover 10, the negative-electrode upper plastic member 63, and the negative-electrode metal pressing block 43 and is welded to the negative-electrode metal pressing block 43, and the end of the negative pole 73 away from the metal pressing block is welded to the negative-electrode adapter sheet 233 to achieve electrical connection between the negative-electrode metal pressing block 43 and a negative-electrode sheet.

Optionally, the positive pole 71 and the negative pole 73 each include a flange portion (not shown) and a boss (not shown) protruding from a surface of the flange portion. The flange portion is located between the lower plastic member 50 and the positive-electrode adapter sheet 231/negative-electrode adapter sheet 233 and is welded to the positive-electrode adapter sheet 231/negative-electrode adapter sheet 233. The boss sequentially penetrates through the lower plastic member 50, the top cover 10, the positive-electrode upper plastic member 61/negative-electrode upper plastic member 63, and the positive-electrode metal pressing block 41/negative-electrode metal pressing block 43, such that the positive-electrode metal pressing block 41 is electrically connected to the positive-electrode adapter sheet 231 by means of the positive pole 71, and the negative-electrode metal pressing block 43 is electrically connected to the negative-electrode adapter sheet 233 by means of the negative pole 73.

Optionally, the flange portion is arranged on the side of the lower plastic member 50 away from the top cover, and the boss penetrates through the first through hole 18 and the second through hole 54; and the boss has a central axis, and the pole 70 is rotationally symmetrical about the central axis. In this way, there is no need to distinguish left and right directions during assembly of the pole 70, and the assembly can be completed by insertion after direct alignment of the long side, reducing the assembly requirement of the pole 70.

In some embodiments, the end cover assembly 100 in the embodiments of the present disclosure further includes a sealing ring 80, the boss of the positive pole 71 and the boss of the negative pole 73 are each sleeved with the sealing ring 80, and the sealing ring 80 is configured to insulate the positive pole 71/negative pole 73 from the top cover 10 and seal the gap between the positive pole 71/negative pole 73 and the top cover 10.

In some embodiments, the end cover assembly 100 in the embodiments of the present disclosure further includes a sealing pin 90. The sealing pin 90 penetrates through the liquid-injection hole 12 for sealing the liquid-injection hole 12. After the energy-storage apparatus 200 is assembled and filled with the electrolyte, the sealing pin 90 is firstly arranged in the liquid-injection hole 12, the sealing cap 30 is then arranged on the first surface 11 of the top cover 10 and the sealing pin 90, and the sealing cap 30 is welded to the top cover 10.

Optionally, the sealing pin 90 may be, but not limited to, an insulating component such as a resin or rubber.

## Claims

1. An end cover assembly (100) for an energy-storage apparatus (200), comprising:
a top cover (10) having a first surface (11), wherein the top cover (10) further defines a liquid-injection hole (12) extending through the first surface (11); and the first surface (11) comprises a first sub-surface (111) and a second sub-surface (113) connected to the first sub-surface (111), the first sub-surface (111) is around the liquid-injection hole (12), the second sub-surface (113) is around a periphery of the first sub-surface (111), and roughness of the first sub-surface (111) is greater than roughness of the second sub-surface (113); and
a top patch arranged on the first surface (111) of the top cover (10);
**characterized in that**:
the top patch is attached to the first surface (111) of the top cover (10) by adhesive.

2. The end cover assembly (100) according to claim 1, wherein the roughness Ra of the first sub-surface (111) is in a range of 3.2 ≤ Ra ≤ 50; and/or
the first sub-surface (111) is annular, and the first sub-surface (111) has a linewidth L1 in a range of 1.5 mm ≤ L1 ≤ 8.5 mm; and/or
the first sub-surface (111) is annular, the liquid-injection hole (12) is circular, and a ratio of an outer radius R1 of the first sub-surface (111) to a radius R2 of the liquid-injection hole (12) is in a range of 1.2 ≤ R1/R2 ≤ 4.8.

3. The end cover assembly (100) according to any of claims 1 and 2, further comprising: a sealing cap (30), and an annular welding portion (31) located at a junction between the sealing cap (30) and the top cover (10), wherein the sealing cap (30) seals the liquid-injection hole (12) and is connected to the top cover (10); and
the top cover (10) is further provided with a first welding mark (33) at the first sub-surface (111), and the first welding mark (33) comprises a first end portion (331) and a second end portion (333) opposite to the first end portion (331); and the first end portion (331) is connected to the welding portion (31), and the second end portion (333) is located outside a periphery of the welding portion (31) and is spaced apart from the welding portion (31).

4. The end cover assembly (100) according to claim 3, wherein a ratio of an outer radius R4 of the welding portion (31) to a length L2 of the first welding mark (33) is in a range of 0.4 ≤ R4/L2 ≤ 2.8; and/or
the first welding mark (33) is straight, and an angle α between a line connecting a center of the sealing cap (30) and the first end portion (331) and the first welding mark (33) is in a range of 70° ≤ α ≤ 120°.

5. The end cover assembly (100) according to any of claims 3 and 4, wherein the first sub-surface (111) is annular, the sealing cap (30) is circular, and a ratio of an outer radius R1 of the first sub-surface (111) to a radius R3 of the sealing cap (30) is in a range of 1.45 ≤ R1/R3 ≤ 3.65.

6. The end cover assembly (100) according to any of claims 3-5, wherein the top cover (10) is further provided with a second welding mark (35) at the first sub-surface (111), the second welding mark (35) comprises a third end portion (351) and a fourth end portion (353) opposite to the third end portion (351), the third end portion (351) is connected to the welding portion (31), the fourth end portion (353) is located at the periphery of the welding portion (31) and is spaced apart from the welding portion (31), the first end portion (331) is spaced apart from or overlapped with the third end portion (351), and the second end portion (333) and the fourth end portion (353) are respectively arranged at two opposite sides of a line connecting the first end portion (331) and a center of the liquid-injection hole (12).

7. The end cover assembly (100) according to claim 6, wherein the welding portion (31) is annular, the first welding mark (33) has a length L2 satisfying $1.5 mm \leq L 2 \leq \sqrt{R {1}^{2} - R {4}^{2}}$, and the second welding mark (35) has a length L3 satisfying $1.5 mm \leq L 3 \leq \sqrt{R {1}^{2} - R {4}^{2}}$, wherein R1 is the outer radius of the first sub-surface (111), and R4 is an outer radius of the welding portion (31); the length L2 of the first welding mark (33) is in a range of 1.5 mm ≤ L2 ≤ 5.5 mm; and the length L3 of the second welding mark (35) is in a range of 1.5 mm ≤ L3 ≤ 5.5 mm; and/or
a ratio of an outer radius R4 of the welding portion (31) to a length L3 of the second welding mark (35) is in a range of 0.4 ≤ R4/L3 ≤ 2.8; and/or
the second welding mark (35) is straight, and an angle β between a line connecting a center of the sealing cap (30) and the third end portion (351) and the second welding mark (35) is in a range of 70° ≤ β ≤ 120°; and/or
the welding portion (31) is annular, the first welding mark (33) and the second welding mark (35) are straight, and the first welding mark (33) and the second welding mark (35) are both tangent to the welding portion (31); and/or
the welding portion (31) is annular, the second welding mark (35) is arc, and the second welding mark (35) is tangent to the welding portion (31).

8. The end cover assembly (100) according to any of claims 1-7, wherein the top cover (10) further has a second surface (13) away from the first surface (11), and the liquid-injection hole (12) further extends through the second surface (13); and the second surface (13) comprises a third sub-surface (131) and a fourth sub-surface (133) connected to the third sub-surface (131), the third sub-surface (131) is around a periphery of the liquid-injection hole (12), the fourth sub-surface (133) is around a periphery of the third sub-surface (131), and the third sub-surface (131) exceeds the fourth sub-surface (133) to form a protrusion (14).

9. The end cover assembly (100) according to claim 8, wherein the second surface (13) further comprises a fifth sub-surface (135), the fifth sub-surface (135) is around a periphery of the fourth sub-surface (133) and connected to the fourth sub-surface (133), the fifth sub-surface (135) exceeds the fourth sub-surface (133), the third sub-surface (131) exceeds the fifth sub-surface (135), and the third sub-surface (131), the fourth sub-surface (133), and the fifth sub-surface (135) cooperatively define a groove (15) around the protrusion (14); and
the protrusion (14) has a linewidth S1 in a range of 2.2 mm ≤ S1 ≤ 3.6 mm; and the groove (15) has a linewidth S2 in a range of 1.2 mm ≤ S2 ≤ 4.6 mm.

10. The end cover assembly (100) according to any of claims 1-9, wherein the energy-storage apparatus (200) further comprises an electrode assembly (210); the top cover (10) further has a second surface (13) away from the first surface (11), and the liquid-injection hole (12) further extends through the second surface (13); the top cover (10) further defines a first accommodating recess (16) from the second surface (13), a second accommodating recess (17) recessed from a bottom wall of the first accommodating recess (16), and a first through hole (18) extending through both a bottom wall of the second accommodating recess (17) and the first surface (11), the first accommodating recess (16), the second accommodating recess (17) and the first through hole (18) are in communication with one another, and the first through hole (18) is spaced apart from the liquid-injection hole (12); and
the end cover assembly (100) further comprises:
a lower plastic member (50), wherein the lower plastic member (50) is disposed on the second surface (13) of the top cover (10); the lower plastic member (50) comprises a body portion (51), a first abutting portion (52) protruding from a surface of the body portion (51) facing the top cover (10), and a second abutting portion protruding from the surface of the first abutting portion (52) facing the top cover (10); the first abutting portion (52) is located in the first accommodating recess (16) and abuts against the bottom wall of the first accommodating recess (16) and a side wall of the first accommodating recess (16); the second abutting portion is located in the second accommodating recess (17) and abuts against the bottom wall of the second accommodating recess (17) and a side wall of the second accommodating recess (17); and the lower plastic member (50) further defines a second through hole (54) sequentially extending through the body portion (51), the first abutting portion (52), and the second abutting portion, and the second through hole (54) is defined corresponding to the first through hole (18); and
a pole (70), wherein one part of the pole (70) is located at a side of the lower plastic member (50) away from the top cover (10), and the other part of the pole (70) sequentially extends through the second through hole (54) and the first through hole (18) and is insulated from the top cover (10), and the pole (70) is configured to be electrically connected to the electrode assembly (210).

11. The end cover assembly (100) according to any of claims 1-10, further comprising a lower plastic member (50), wherein the lower plastic member (50) is disposed on a side of the top cover (10) away from the first surface (11); the lower plastic member (50) comprises a first plastic sub-member (55), a second plastic sub-member (56), a third plastic sub-member (57), and a fourth plastic sub-member (58); the first plastic sub-member (55) and the second plastic sub-member (56) are arranged at an interval in a first direction on a surface of the top cover (10) away from the first surface (11); the first plastic sub-member (55) defines a leakage hole (551) at a position of the first plastic sub-member (55) close to the second plastic sub-member (56), the leakage hole (551) is in communication with the liquid-injection hole (12), the first plastic sub-member (55) has a first peripheral side wall (552) and a second peripheral side wall (553) that are connected end-to-end and define the leakage hole (551), the first peripheral side wall (552) is a cambered surface, the second peripheral side wall (553) is a flat surface, and the second peripheral side wall (553) is closer to the second plastic sub-member (56) than the first peripheral side wall (552); the third plastic sub-member (57) and the fourth plastic sub-member (58) are arranged at an interval in a second direction, and the third plastic sub-member (57) is connected to both the first plastic sub-member (55) and the second plastic sub-member (56) in a snap-fit manner; the fourth plastic sub-member (58) is connected to both the first plastic sub-member (55) and the second plastic sub-member (56) in a snap-fit manner; and the third plastic sub-member (57) and the fourth plastic sub-member (58) are both partially located between the first plastic sub-member (55) and the second plastic sub-member (56), the first direction being perpendicular to the second direction.

12. The end cover assembly (100) according to claim 11, wherein the top cover (10) further has a second surface (13) away from the first surface (11) and defines an explosion-proof hole (19) extending through the first surface (11) and the second surface (13), and the explosion-proof hole (19) is spaced apart from the liquid-injection hole (12); and the end cover assembly (100) further comprises an explosion-proof sheet (21) sealing the explosion-proof hole (19) and connected to the top cover (10); and
the first plastic sub-member (55) further defines a vent channel (554) in communication with the leakage hole (551), the vent channel (554) extends through both a surface of the first plastic sub-member (55) facing the second plastic sub-member (56) and a surface of the first plastic sub-member (55) facing the top cover (10), and the vent channel (554) is in communication with a side of the explosion-proof sheet (21) facing the first plastic sub-member (55).

13. An energy-storage apparatus (200), comprising:
the end cover assembly (100) according to any one of claims 1-12;
an adapter sheet (230) disposed at a side of the top cover (10) away from the first surface (11), wherein the adapter sheet (230) has one end electrically connected to the end cover assembly (100); and
an electrode assembly (210) disposed at a side of the adapter sheet (230) away from the end cover assembly (100), wherein the electrode assembly (210) is electrically connected to one end of the adapter sheet (230) away from the end cover assembly (100).

14. An electricity-consumption device (300), comprising:
an electricity-consumption device body (310); and
the energy-storage apparatus (200) according to claim 13, the energy-storage apparatus (200) supplying power to the electricity-consumption device body (310).

## Patentansprüche

1. Endabdeckungsbaugruppe (100) für eine Energiespeichereinrichtung (200), umfassend:
eine obere Abdeckung (10), die eine erste Oberfläche (11) aufweist, wobei die obere Abdeckung (10) weiter ein Flüssigkeitseinspritzloch (12) definiert, das sich durch die erste Oberfläche (11) erstreckt; und die erste Oberfläche (11) eine erste Unterfläche (111) und eine zweite Unterfläche (113), die mit der ersten Unterfläche (111) verbunden ist, umfasst, die erste Unterfläche (111) um das Flüssigkeitseinspritzloch (12) herum liegt, die zweite Unterfläche (113) um einen Umfang der ersten Unterfläche (111) herum liegt und die Rauheit der ersten Unterfläche (111) größer ist als die Rauheit der zweiten Unterfläche (113),
einen oberen Patch, der auf der ersten Oberfläche (111) der oberen Abdeckung (10) angeordnet ist;
**dadurch gekennzeichnet, dass**:
der obere Patch mit Klebstoff an der ersten Oberfläche (111) der oberen Abdeckung (10) befestigt ist.

2. Endabdeckungsbaugruppe (100) nach Anspruch 1, wobei die Rauheit Ra der ersten Unterfläche (111) in einem Bereich von 3,2 ≤ Ra ≤ 50 liegt; und/oder
die erste Unterfläche (111) ringförmig ist und die erste Unterfläche (111) eine Linienbreite L1 in einem Bereich von 1,5 mm ≤ L1 ≤ 8,5 mm aufweist; und/oder
die erste Unterfläche (111) ringförmig ist, das Flüssigkeitseinspritzloch (12) kreisförmig ist und ein Verhältnis eines Außenradius R1 der ersten Unterfläche (111) zu einem Radius R2 des Flüssigkeitseinspritzlochs (12) in einem Bereich von 1,2 ≤ R1/R2 ≤ 4,8 liegt.

3. Endabdeckungsbaugruppe (100) nach einem der Ansprüche 1 und 2, weiter umfassend eine Dichtungskappe (30), und einen ringförmigen Schweißabschnitt (31), der sich an einer Verbindung zwischen der Dichtungskappe (30) und der oberen Abdeckung (10) befindet, wobei die Dichtungskappe (30) das Flüssigkeitseinspritzloch (12) abdichtet und mit der oberen Abdeckung (10) verbunden ist;
die obere Abdeckung (10) weiter mit einer ersten Schweißmarke (33) an der ersten Unterfläche (111) versehen ist, und die erste Schweißmarke (33) einen ersten Endabschnitt (331) und einen zweiten Endabschnitt (333) gegenüber dem ersten Endabschnitt (331) umfasst; und der erste Endabschnitt (331) mit dem Schweißabschnitt (31) verbunden ist, und der zweite Endabschnitt (333) sich an einem Umfang des Schweißabschnitts (31) befindet und von dem Schweißabschnitt (31) beabstandet ist.

4. Endabdeckungsbaugruppe (100) nach Anspruch 3, wobei ein Verhältnis eines Außenradius R4 des Schweißabschnitts (31) zu einer Länge L2 der ersten Schweißmarke (33) in einem Bereich von 0,4 ≤ R4/L2 ≤ 2,8 liegt; und/oder
die erste Schweißmarke (33) gerade ist und ein Winkel α zwischen einer Linie, die eine Mitte der Dichtungskappe (30) und den ersten Endabschnitt (331) verbindet, und der ersten Schweißmarke (33) in einem Bereich von 70° ≤ α ≤ 120° liegt.

5. Endabdeckungsbaugruppe (100) nach einem der Ansprüche 3 und 4, wobei die erste Unterfläche (111) ringförmig ist, die Dichtungskappe (30) kreisförmig ist und ein Verhältnis eines Außenradius R1 der ersten Unterfläche (111) zu einem Radius R3 der Dichtungskappe (30) in einem Bereich von 1,45 ≤ R1/R3 ≤ 3,65 liegt.

6. Endabdeckungsbaugruppe (100) nach einem der Ansprüche 3 bis 5, wobei die obere Abdeckung (10) weiter mit einer zweiten Schweißmarke (35) an der ersten Unterfläche (111) versehen ist, die zweite Schweißmarke (35) einen dritten Endabschnitt (351) und einen vierten Endabschnitt (353) gegenüber dem dritten Endabschnitt (351) umfasst, der dritte Endabschnitt (351) mit dem Schweißabschnitt (31) verbunden ist, der vierte Endabschnitt (353) sich am Umfang des Schweißabschnitts (31) befindet und von dem Schweißabschnitt (31) beabstandet ist, der erste Endabschnitt (331) von dem dritten Endabschnitt (351) beabstandet ist oder sich mit diesem überlappt, und der zweite Endabschnitt (333) und der vierte Endabschnitt (353) jeweils an zwei gegenüberliegenden Seiten einer Linie angeordnet sind, die den ersten Endabschnitt (331) und eine Mitte des Flüssigkeitseinspritzlochs (12) verbindet.

7. Endabdeckungsbaugruppe (100) nach Anspruch 6, wobei der Schweißabschnitt (31) ringförmig ist, die erste Schweißmarke (33) eine Länge L2 aufweist, die $1 , 5 mm \leq L 2 \leq \sqrt{R {1}^{2} - R {4}^{2}}$, entspricht, und die zweite Schweißmarke (35) eine Länge L3 aufweist, die $1 , 5 mm \leq L 3 \leq \sqrt{R {1}^{2} - R {4}^{2}}$ entspricht, wobei R1 der Außenradius der ersten Unterfläche (111) ist, und R4 ein Außenradius des Schweißabschnitts (31) ist; die Länge L2 der ersten Schweißmarke (33) in einem Bereich von 1,5 mm ≤ L2 ≤ 5,5 mm liegt; und die Länge L3 der zweiten Schweißmarke (35) in einem Bereich von 1,5 mm ≤ L3 ≤ 5,5 mm liegt; und/oder
ein Verhältnis eines Außenradius R4 des Schweißabschnitts (31) zu einer Länge L3 der zweiten Schweißmarke (35) in einem Bereich von 0,4 ≤ R4/L3 ≤ 2,8 liegt; und/oder
die zweite Schweißmarke (35) gerade ist und ein Winkel β zwischen einer Linie, die eine Mitte der Dichtungskappe (30) und den dritten Endabschnitt (351) verbindet, und der zweiten Schweißmarke (35) in einem Bereich von 70° ≤ β ≤ 120° liegt; und/oder
der Schweißabschnitt (31) ringförmig ist, die erste Schweißmarke (33) und die zweite Schweißmarke (35) gerade sind und die erste Schweißmarke (33) und die zweite Schweißmarke (35) beide tangential zum Schweißabschnitt (31) sind; und/oder
der Schweißabschnitt (31) ringförmig ist, die zweite Schweißmarke (35) ein Lichtbogen ist und die zweite Schweißmarke (35) tangential zum Schweißabschnitt (31) ist.

8. Endabdeckungsbaugruppe (100) nach einem der Ansprüche 1 bis 7, wobei die obere Abdeckung (10) weiter eine zweite Oberfläche (13) aufweist, die von der ersten Oberfläche (11) entfernt ist, und das Flüssigkeitseinspritzloch (12) sich weiter durch die zweite Oberfläche (13) erstreckt; und die zweite Oberfläche (13) eine dritte Unterfläche (131) und eine vierte Unterfläche (133) umfasst, die mit der dritten Unterfläche (131) verbunden sind, die dritte Unterfläche (131) um einen Umfang des Flüssigkeitseinspritzlochs (12) herum liegt, die vierte Unterfläche (133) um einen Umfang der dritten Unterfläche (131) herum liegt, und die dritte Unterfläche (131) die vierte Unterfläche (133) überragt, um einen Vorsprung (14) zu bilden.

9. Endabdeckungsbaugruppe (100) nach Anspruch 8, wobei die zweite Oberfläche (13) weiter eine fünfte Unterfläche (135) umfasst, die fünfte Unterfläche (135) um einen Umfang der vierten Unterfläche (133) herum liegt und mit der vierten Unterfläche (133) verbunden ist, die fünfte Unterfläche (135) die vierte Unterfläche (133) überragt, die dritte Unterfläche (131) die fünfte Unterfläche (135) überragt, und die dritte Unterfläche (131), die vierte Unterfläche (133) und die fünfte Unterfläche (135) gemeinsam eine Nut (15) um den Vorsprung (14) herum definieren; und
der Vorsprung (14) eine Linienbreite S1 in einem Bereich von 2,2 mm ≤ S1≤ 3,6 mm aufweist; und die Nut (15) eine Linienbreite S2 in einem Bereich von 1,2 mm ≤ S2 ≤ 4,6 mm aufweist.

10. Endabdeckungsbaugruppe (100) nach einem der Ansprüche 1 bis 9, wobei die Energiespeichereinrichtung (200) weiter eine Elektrodenbaugruppe (210) umfasst; die obere Abdeckung (10) weiter eine zweite Oberfläche (13) aufweist, die von der ersten Oberfläche (11) entfernt ist, und das Flüssigkeitseinspritzloch (12) sich weiter durch die zweite Oberfläche (13) erstreckt; die obere Abdeckung (10) weiter eine erste Aufnahmevertiefung (16) von der zweiten Oberfläche (13), eine zweite Aufnahmevertiefung (17), die von einer Bodenwand der ersten Aufnahmevertiefung (16) vertieft ist, und ein erstes Durchgangsloch (18) definiert, das sich sowohl durch eine Bodenwand der zweiten Aufnahmevertiefung (17) als auch durch die erste Oberfläche (11) erstreckt, die erste Aufnahmevertiefung (16), die zweite Aufnahmevertiefung (17) und das erste Durchgangsloch (18) miteinander in Verbindung stehen, und das erste Durchgangsloch (18) von dem Flüssigkeitseinspritzloch (12) beabstandet ist; und
die Endabdeckungsbaugruppe (100) weiter umfasst:
ein unteres Kunststoffelement (50), wobei das untere Kunststoffelement (50) auf der zweiten Oberfläche (13) der oberen Abdeckung (10) angeordnet ist; das untere Kunststoffelement (50) einen Körperabschnitt (51), einen ersten Abstützabschnitt (52), der aus einer der oberen Abdeckung (10) zugewandten Oberfläche des Körperabschnitts (51) vorspringt, und einen zweiten Abstützabschnitt umfasst, der aus der der oberen Abdeckung (10) zugewandten Oberfläche des ersten Abstützabschnitts (52) vorspringt; der erste Abstützabschnitt (52) sich in der ersten Aufnahmevertiefung (16) befindet und an der Bodenwand der ersten Aufnahmevertiefung (16) und einer Seitenwand der ersten Aufnahmevertiefung (16) anliegt; der zweite Abstützabschnitt sich in der zweiten Aufnahmevertiefung (17) befindet und an der Bodenwand der zweiten Aufnahmevertiefung (17) und einer Seitenwand der zweiten Aufnahmevertiefung (17) anliegt; und das untere Kunststoffelement (50) weiter ein zweites Durchgangsloch (54) definiert, das sich nacheinander durch den Körperabschnitt (51), den ersten Abstützabschnitt (52) und den zweiten Abstützabschnitt erstreckt, und das zweite Durchgangsloch (54) entsprechend dem ersten Durchgangsloch (18) definiert ist; und
einen Pol (70), wobei sich ein Teil des Pols (70) an einer Seite des unteren Kunststoffelements (50) entfernt von der oberen Abdeckung (10) befindet, und der andere Teil des Pols (70) sich nacheinander durch das zweite Durchgangsloch (54) und das erste Durchgangsloch (18) erstreckt und von der oberen Abdeckung (10) isoliert ist, und der Pol (70) so ausgebildet ist, dass er elektrisch mit der Elektrodenbaugruppe (210) verbunden ist.

11. Endabdeckungsbaugruppe (100) nach einem der Ansprüche 1 bis 10, weiter umfassend ein unteres Kunststoffelement (50), wobei das untere Kunststoffelement (50) auf einer Seite der oberen Abdeckung (10) angeordnet ist, die von der ersten Oberfläche (11) entfernt ist; das untere Kunststoffelement (50) ein erstes unteres Kunststoffelement (55), ein zweites unteres Kunststoffelement (56), ein drittes unteres Kunststoffelement (57) und ein viertes unteres Kunststoffelement (58) umfasst; das erste untere Kunststoffelement (55) und das zweite untere Kunststoffelement (56) in einem Abstand in einer ersten Richtung auf einer von der ersten Oberfläche (11) entfernten Oberfläche der oberen Abdeckung (10) angeordnet sind; das erste untere Kunststoffelement (55) ein Leckageloch (551) an einer Position des ersten unteren Kunststoffelements (55) nahe am zweiten unteren Kunststoffelement (56) definiert, das Leckageloch (551) in Verbindung mit dem Flüssigkeitseinspritzloch (12) steht, das erste untere Kunststoffelement (55) eine erste periphere Seitenwand (552) und eine zweite periphere Seitenwand (553) aufweist, die durchgehend verbunden sind und das Leckageloch (551) definieren, die erste periphere Seitenwand (552) eine gewölbte Oberfläche ist, die zweite periphere Seitenwand (553) eine ebene Fläche ist, und die zweite periphere Seitenwand (553) näher an dem zweiten unteren Kunststoffelement (56) liegt als die erste periphere Seitenwand (552); das dritte untere Kunststoffelement (57) und das vierte untere Kunststoffelement (58) in einem Abstand in einer zweiten Richtung angeordnet sind, und das dritte untere Kunststoffelement (57) sowohl mit dem ersten unteren Kunststoffelement (55) als auch mit dem zweiten unteren Kunststoffelement (56) in Schnappverbindung verbunden ist; das vierte untere Kunststoffelement (58) sowohl mit dem ersten unteren Kunststoffelement (55) als auch mit dem zweiten unteren Kunststoffelement (56) in Schnappverbindung verbunden ist; und das dritte untere Kunststoffelement (57) und das vierte untere Kunststoffelement (58) sich beide teilweise zwischen dem ersten unteren Kunststoffelement (55) und dem zweiten unteren Kunststoffelement (56) befinden, wobei die erste Richtung senkrecht zur zweiten Richtung ist.

12. Endabdeckungsbaugruppe (100) nach Anspruch 11, wobei die obere Abdeckung (10) weiter eine zweite Oberfläche (13) aufweist, die von der ersten Oberfläche (11) entfernt ist, und ein explosionsgeschütztes Loch (19) definiert, das sich durch die erste Oberfläche (11) und die zweite Oberfläche (13) erstreckt, und das explosionsgeschützte Loch (19) von dem Flüssigkeitseinspritzloch (12) beabstandet ist; und die Endabdeckungsbaugruppe (100) weiter ein explosionsgeschütztes Blech (21) umfasst, das das explosionsgeschützte Loch (19) abdichtet und mit der oberen Abdeckung (10) verbunden ist; und
das erste untere Kunststoffelement (55) weiter einen Entlüftungskanal (554) in Verbindung mit dem Leckageloch (551) definiert, der Entlüftungskanal (554) sich sowohl durch eine dem zweiten unteren Kunststoffelement (56) zugewandte Oberfläche des ersten unteren Kunststoffelements (55) als auch durch eine der oberen Abdeckung (10) zugewandte Oberfläche des ersten unteren Kunststoffelements (55) erstreckt, und der Entlüftungskanal (554) in Verbindung mit einer dem ersten unteren Kunststoffelement (55) zugewandten Seite des explosionsgeschützten Blechs (21) steht.

13. Energiespeichereinrichtung (200), umfassend:
die Endabdeckungsbaugruppe (100) nach einem der Ansprüche 1 bis 12;
ein Adapterblech (230), das an einer Seite der oberen Abdeckung (10) von der ersten Oberfläche (11) weg angeordnet ist, wobei das Adapterblech (230) ein Ende aufweist, das elektrisch mit der Endabdeckungsbaugruppe (100) verbunden ist; und
eine Elektrodenbaugruppe (210), die an einer Seite des Adapterblechs (230) angeordnet ist, die von der Endabdeckungsbaugruppe (100) entfernt ist, wobei die Elektrodenbaugruppe (210) elektrisch mit einem Ende des Adapterblechs (230) verbunden ist, das von der Endabdeckungsbaugruppe (100) entfernt ist.

14. Stromverbrauchsvorrichtung (300), umfassend:
einen Stromverbrauchsvorrichtungskörper (310); und
die Energiespeichereinrichtung (200) nach Anspruch 13, wobei die Energiespeichereinrichtung (200) den Stromverbrauchsvorrichtungskörper (310) mit Strom versorgt.

## Revendications

1. Ensemble couvercle d'extrémité (100) pour un appareil de stockage d'énergie (200), comportant :
un couvercle supérieur (10) présentant une première surface (11), dans lequel le couvercle supérieur (10) définit en outre un trou d'injection de liquide (12) s'étendant à travers la première surface (11) ; et la première surface (11) comporte une première sous-surface (111) et une deuxième sous-surface (113) reliée à la première sous-surface (111), la première sous-surface (111) se trouve autour du trou d'injection de liquide (12), la deuxième sous-surface (113) se trouve autour d'une périphérie de la première sous-surface (111), et la rugosité de la première sous-surface (111) est supérieure à la rugosité de la deuxième sous-surface (113) ; et
une pièce rapportée supérieure agencée sur la première surface (111) du couvercle supérieur (10) ;
**caractérisé en ce que** :
la pièce rapportée supérieure est fixée à la première surface (111) du couvercle supérieur (10) par adhésif.

2. Ensemble couvercle d'extrémité (100) selon la revendication 1, dans lequel la rugosité Ra de la première sous-surface (111) est dans une plage de 3,2 ≤ Ra ≤ 50 ; et/ou
la première sous-surface (111) est annulaire et la première sous-surface (111) présente une largeur de ligne L1 dans une plage de 1,5 mm ≤ L1 ≤ 8,5 mm ; et/ou
la première sous-surface (111) est annulaire, le trou d'injection de liquide (12) est circulaire et un rapport d'un rayon extérieur R1 de la première sous-surface (111) à un rayon R2 du trou d'injection de liquide (12) est dans une plage de 1,2 ≤ R1/R2 ≤ 4,8.

3. Ensemble couvercle d'extrémité (100) selon l'une quelconque des revendications 1 et 2, comportant en outre : un bouchon de fermeture (30) et une partie de soudure annulaire (31) située à une jonction entre le bouchon de fermeture (30) et le couvercle supérieur (10), dans lequel le bouchon de fermeture (30) bouche le trou d'injection de liquide (12) et est relié au couvercle supérieur (10) ; et
le couvercle supérieur (10) est en outre doté d'une première marque de soudure (33) au niveau de la première sous-surface (111), et la première marque de soudure (33) comporte une première partie d'extrémité (331) et une deuxième partie d'extrémité (333) opposée à la première partie d'extrémité (331) ; et la première partie d'extrémité (331) est reliée à la partie de soudure (31) et la deuxième partie d'extrémité (333) est située à l'extérieur d'une périphérie de la partie de soudure (31) et est espacée de la partie de soudure (31).

4. Ensemble couvercle d'extrémité (100) selon la revendication 3, dans lequel un rapport d'un rayon extérieur R4 de la partie de soudure (31) sur une longueur L2 de la première marque de soudure (33) est dans une plage de 0,4 ≤ R4/L2 ≤ 2,8 ; et/ou
la première marque de soudure (33) est droite et un angle α entre une ligne reliant un centre du bouchon de fermeture (30) et la première partie d'extrémité (331) et la première marque de soudure (33) est dans une plage de 70° ≤ α ≤ 120°.

5. Ensemble couvercle d'extrémité (100) selon l'une quelconque des revendications 3 et 4, dans lequel la première sous-surface (111) est annulaire, le bouchon de fermeture (30) est circulaire et un rapport d'un rayon extérieur R1 de la première sous-surface (111) à un rayon R3 du bouchon de fermeture (30) est dans une plage de 1,45 ≤ R1/R3 ≤ 3,65.

6. Ensemble couvercle d'extrémité (100) selon l'une quelconque des revendications 3 à 5, dans lequel le couvercle supérieur (10) est en outre doté d'une deuxième marque de soudure (35) au niveau de la première sous-surface (111), la deuxième marque de soudure (35) comporte une troisième partie d'extrémité (351) et une quatrième partie d'extrémité (353) opposée à la troisième partie d'extrémité (351), la troisième partie d'extrémité (351) est reliée à la partie de soudure (31), la quatrième partie d'extrémité (353) est située à la périphérie de la partie de soudure (31) et est espacée de la partie de soudure (31), la première partie d'extrémité (331) est espacée de la troisième partie d'extrémité (351) ou est chevauchée par celle-ci, et la deuxième partie d'extrémité (333) et la quatrième partie d'extrémité (353) sont respectivement agencées sur deux côtés opposés d'une ligne reliant la première partie d'extrémité (331) et un centre du trou d'injection de liquide (12).

7. Ensemble couvercle d'extrémité (100) selon la revendication 6, dans lequel la partie de soudure (31) est annulaire, la première marque de soudure (33) présente une longueur L2 satisfaisant $1 , 5 mm \leq L 2 \leq \sqrt{R {1}^{2} - R {4}^{2}}$, et la deuxième marque de soudure (35) présente une longueur L3 satisfaisant $1 , 5 mm \leq L 3 \leq \sqrt{R {1}^{2} - R {4}^{2}}$ , dans lequel R1 est le rayon extérieur de la première sous-surface (111) et R4 est un rayon extérieur de la partie de soudure (31) ; la longueur L2 de la première marque de soudure (33) est dans une plage de 1,5 mm ≤ L2 ≤ 5,5 mm ; et la longueur L3 de la deuxième marque de soudure (35) est dans une plage de 1,5 mm ≤ L3 ≤ 5,5 mm ; et/ou
un rapport d'un rayon extérieur R4 de la partie de soudure (31) à une longueur L3 de la deuxième marque de soudure (35) est dans une plage de 0,4 ≤ R4/L3 ≤ 2,8 ; et/ou
la deuxième marque de soudure (35) est droite et un angle β entre une ligne reliant un centre du bouchon de fermeture (30) et la troisième partie d'extrémité (351) et la deuxième marque de soudure (35) est dans une plage de 70° ≤ β ≤ 120° ; et/ou
la partie de soudure (31) est annulaire, la première marque de soudure (33) et la deuxième marque de soudure (35) sont droites, et la première marque de soudure (33) et la deuxième marque de soudure (35) sont toutes deux tangentes à la partie de soudure (31) ; et/ou
la partie de soudure (31) est annulaire, la deuxième marque de soudure (35) est arquée et la deuxième marque de soudure (35) est tangente à la partie de soudure (31).

8. Ensemble couvercle d'extrémité (100) selon l'une quelconque des revendications 1 à 7, dans lequel le couvercle supérieur (10) présente en outre une deuxième surface (13) éloignée de la première surface (11) et le trou d'injection de liquide (12) s'étend en outre à travers la deuxième surface (13) ; et la deuxième surface (13) comporte une troisième sous-surface (131) et une quatrième sous-surface (133) reliée à la troisième sous-surface (131), la troisième sous-surface (131) se trouve autour d'une périphérie du trou d'injection de liquide (12), la quatrième sous-surface (133) se trouve autour d'une périphérie de la troisième sous-surface (131) et la troisième sous-surface (131) dépasse de la quatrième sous-surface (133) pour former une saillie (14).

9. Ensemble couvercle d'extrémité (100) selon la revendication 8, dans lequel la deuxième surface (13) comporte en outre une cinquième sous-surface (135), la cinquième sous-surface (135) se trouve autour d'une périphérie de la quatrième sous-surface (133) et est reliée à la quatrième sous-surface (133), la cinquième sous-surface (135) dépasse de la quatrième sous-surface (133), la troisième sous-surface (131) dépasse de la cinquième sous-surface (135) et la troisième sous-surface (131), la quatrième sous-surface (133) et la cinquième sous-surface (135) définissent de manière coopérative une rainure (15) autour de la saillie (14) ; et
la saillie (14) présente une largeur de ligne S1 dans une plage de 2,2 mm ≤ S1≤ 3,6 mm ; et la rainure (15) présente une largeur de ligne S2 dans une plage de 1,2 mm ≤ S2 ≤ 4,6 mm.

10. Ensemble couvercle d'extrémité (100) selon l'une quelconque des revendications 1 à 9, dans lequel l'appareil de stockage d'énergie (200) comporte en outre un ensemble d'électrodes (210) ; le couvercle supérieur (10) présente en outre une deuxième surface (13) éloignée de la première surface (11) et le trou d'injection de liquide (12) s'étend en outre à travers la deuxième surface (13) ; le couvercle supérieur (10) définit en outre un premier évidement de réception (16) à partir de la deuxième surface (13), un deuxième évidement de réception (17) en retrait par rapport à une paroi inférieure du premier évidement de réception (16) et un premier trou traversant (18) s'étendant à la fois à travers une paroi inférieure du deuxième évidement de réception (17) et la première surface (11), le premier évidement de réception (16), le deuxième évidement de réception (17) et le premier trou traversant (18) sont en communication les uns avec les autres, et le premier trou traversant (18) est espacé du trou d'injection de liquide (12) ; et
l'ensemble couvercle d'extrémité (100) comporte en outre :
un élément en plastique inférieur (50), dans lequel l'élément en plastique inférieur (50) est disposé sur la deuxième surface (13) du couvercle supérieur (10) ; l'élément en plastique inférieur (50) comporte une partie corps (51), une première partie de butée (52) faisant saillie à partir d'une surface de la partie corps (51) faisant face au couvercle supérieur (10) et une deuxième partie de butée faisant saillie à partir de la surface de la première partie de butée (52) faisant face au couvercle supérieur (10) ; la première partie de butée (52) est située dans le premier évidement de réception (16) et vient en butée contre la paroi inférieure du premier évidement de réception (16) et une paroi latérale du premier évidement de réception (16) ; la deuxième partie de butée est située dans le deuxième évidement de réception (17) et vient en butée contre la paroi inférieure du deuxième évidement de réception (17) et une paroi latérale du deuxième évidement de réception (17) ; et l'élément en plastique inférieur (50) définit en outre un deuxième trou traversant (54) s'étendant séquentiellement à travers la partie corps (51), la première partie de butée (52) et la deuxième partie de butée, et le deuxième trou traversant (54) est défini de façon à correspondre au premier trou traversant (18) ; et
un pôle (70), dans lequel une partie du pôle (70) est située sur un côté de l'élément en plastique inférieur (50) éloigné du couvercle supérieur (10) et l'autre partie du pôle (70) s'étend séquentiellement à travers le deuxième trou traversant (54) et le premier trou traversant (18) et est isolée du couvercle supérieur (10), et le pôle (70) est configuré pour être électriquement connecté à l'ensemble d'électrodes (210).

11. Ensemble couvercle d'extrémité (100) selon l'une quelconque des revendications 1 à 10, comportant en outre un élément en plastique inférieur (50), dans lequel l'élément en plastique inférieur (50) est disposé sur un côté du couvercle supérieur (10) éloigné de la première surface (11) ; l'élément en plastique inférieur (50) comporte un premier sous-élément en plastique (55), un deuxième sous-élément en plastique (56), un troisième sous-élément en plastique (57) et un quatrième sous-élément en plastique (58) ; le premier sous-élément en plastique (55) et le deuxième sous-élément en plastique (56) sont agencés à un intervalle dans une première direction sur une surface du couvercle supérieur (10) éloignée de la première surface (11) ; le premier sous-élément en plastique (55) définit un trou de fuite (551) à une position du premier sous-élément en plastique (55) proche du deuxième sous-élément en plastique (56), le trou de fuite (551) est en communication avec le trou d'injection de liquide (12), le premier sous-élément en plastique (55) présente une première paroi latérale périphérique (552) et une deuxième paroi latérale périphérique (553) qui sont reliées bout à bout et définissent le trou de fuite (551), la première paroi latérale périphérique (552) est une surface bombée, la deuxième paroi latérale périphérique (553) est une surface plane et la deuxième paroi latérale périphérique (553) est plus proche du deuxième sous-élément en plastique (56) que la première paroi latérale périphérique (552) ; le troisième sous-élément en plastique (57) et le quatrième sous-élément en plastique (58) sont agencés à un intervalle dans une deuxième direction, et le troisième sous-élément en plastique (57) est relié à la fois au premier sous-élément en plastique (55) et au deuxième sous-élément en plastique (56) par encliquetage ; le quatrième sous-élément en plastique (58) est relié à la fois au premier sous-élément en plastique (55) et au deuxième sous-élément en plastique (56) par encliquetage ; et le troisième sous-élément en plastique (57) et le quatrième sous-élément en plastique (58) sont tous deux partiellement situés entre le premier sous-élément en plastique (55) et le deuxième sous-élément en plastique (56), la première direction étant perpendiculaire à la deuxième direction.

12. Ensemble couvercle d'extrémité (100) selon la revendication 11, dans lequel le couvercle supérieur (10) présente en outre une deuxième surface (13) éloignée de la première surface (11) et définit un trou antidéflagrant (19) s'étendant à travers la première surface (11) et la deuxième surface (13), et le trou antidéflagrant (19) est espacé du trou d'injection de liquide (12) ; et l'ensemble couvercle d'extrémité (100) comporte en outre une feuille antidéflagrante (21) bouchant le trou antidéflagrant (19) et reliée au couvercle supérieur (10) ; et
le premier sous-élément en plastique (55) définit en outre un canal d'aération (554) en communication avec le trou de fuite (551), le canal d'aération (554) s'étend à travers à la fois une surface du premier sous-élément en plastique (55) faisant face au deuxième sous-élément en plastique (56) et une surface du premier sous-élément en plastique (55) faisant face au couvercle supérieur (10), et le canal d'aération (554) est en communication avec un côté de la feuille antidéflagrante (21) faisant face au premier sous-élément en plastique (55).

13. Appareil de stockage d'énergie (200), comportant :
l'ensemble couvercle d'extrémité (100) selon l'une quelconque des revendications 1 à 12 ;
une feuille d'adaptation (230) disposée sur un côté du couvercle supérieur (10) éloigné de la première surface (11), dans lequel la feuille d'adaptation (230) présente une extrémité électriquement connectée à l'ensemble couvercle d'extrémité (100) ; et
un ensemble d'électrodes (210) disposé sur un côté de la feuille d'adaptation (230) éloigné de l'ensemble couvercle d'extrémité (100), dans lequel l'ensemble d'électrodes (210) est électriquement connecté à une extrémité de la feuille d'adaptation (230) éloignée de l'ensemble couvercle d'extrémité (100).

14. Dispositif de consommation d'électricité (300), comportant :
un corps de dispositif de consommation d'électricité (310) ; et
l'appareil de stockage d'énergie (200) selon la revendication 13, l'appareil de stockage d'énergie (200) fournissant de l'énergie au corps de dispositif de consommation d'électricité (310).
